# EUROPEAN PATENT SPECIFICATION

(11) **EP 4 629 648 B1**
(45) Date of publication and mention of the grant of the patent: **07.10.2026**
(21) Application number: 25197422.6
(22) Date of filing: 01.06.2021
(51) Int. Cl.: G02B 7/09, G02B 27/64, G03B 5/02, G03B 13/36, G03B 5/00, G03B 3/10, G03B 30/00, H04N 23/54, H04N 23/68, G02B 13/00, H04N 23/55

(54) **LENS DRIVING DEVICE, CAMERA MODULE AND OPTICAL DEVICE**
LINSENANTRIEBSVORRICHTUNG, KAMERAMODUL UND OPTISCHE VORRICHTUNG
DISPOSITIF D'ENTRAÎNEMENT DE LENTILLE, MODULE DE CAMÉRA ET DISPOSITIF OPTIQUE

(30) Priority: 13.07.2020 KR 20200086280; 04.08.2020 KR 20200097379
(43) Date of publication of application: 08.10.2025
(62) Document number(s) of the earlier application(s) in accordance with Art. 76 EPC: 21842130.3 / 4 180 868
(73) Proprietor: LG INNOTEK CO. LTD, Gangseo-gu Seoul 07796 (KR)
(72) Inventor: SON, Byung Wook, 07796 Seoul (KR); YOO, Kyoung Ho, 07796 Seoul (KR)
(74) Representative: Plasseraud IP

(56) References cited:
- WO-A1-2019/119454
- US-A1- 2019 086 686

## Description

### [Technical Field]

The present embodiment relates to a lens driving device, a camera module, and an optical device.

### [Background Art]

As the spread of various portable terminals is widely generalized and wireless Internet services are commercialized, the demands of consumers related to portable terminals are also diversifying, so that various types of additional devices are being installed in the portable terminals.

Among them, there is a camera module that photographs a picture or a video of a subject as a representative one. Optical image stabilization (OIS) is applied to the camera module to prevent an image shaking phenomenon caused by photographer's handshake. In addition, an auto focus (AF) function for automatically adjusting a focus according to a distance of a subject is applied to the camera module.

However, as the aperture of the lens increases with the recent high pixel trend in the image sensor, the weight of the lens is increased, so that there is a problem in that the stress applied to the elastic member supporting the OIS driving is increased when vibration or impact occurs in the camera module. Furthermore, the increase in stress applied to the elastic member causes deformation and disconnection of the elastic member, so that there is a problem in that the OIS cannot be driven and oscillation failure occurs.

However, as the aperture of the lens increases, when vibration and impact are generated in the camera module, the stress applied to the support member supporting the AF driving increases, causing deformation and disconnection of the support member, so that there is a problem in that AF cannot be driven and oscillation failure occurs. WO 2019/119454 A1 discloses a miniaturised objective with voice coil motor based OIS lens movement in directions perpendicular to the optical axis and shape memory alloy based lens focusing movement in the optical axis direction.

### [Detailed Description of the Invention]

### [Technical Subject]

A first embodiment of the present invention is intended to provide a lens driving device comprising an OIS support member capable of supporting the OIS driving of a large aperture lens.

In addition, a first embodiment of the present invention is intended to provide a lens driving device comprising an auto focus (AF) driving structure using a shape memory alloy (SMA).

A second embodiment of the present invention is intended to provide a lens driving device comprising an AF support member capable of supporting AF driving of a large aperture lens.

In addition, the second embodiment of the present invention is intended to provide a lens driving device comprising an OIS driving structure using a shape memory alloy (SMA).

### [Technical Solution]

A lens driving device according to a first embodiment of the present invention comprises: a fixed portion; a moving portion being disposed to move with respect to the fixed portion; a bobbin being disposed inside the moving portion; a magnet being disposed on any one of the bobbin and the fixed portion; a coil being disposed on the other one of the bobbin and the fixed portion; a support member having one end being coupled to the bobbin and the other end being coupled to the moving portion; and a shape memory alloy member being coupled to the fixed portion and the moving portion, wherein the shape memory alloy member moves the moving portion in an optical axis direction, and wherein the coil and the magnet may move the bobbin in a direction perpendicular to the optical axis direction with respect to the moving portion.

Both ends of the shape memory alloy member may be connected to the fixed portion, and a central region may be connected to the moving portion.

The support member may have regions having different widths.

The support member may have a constant width in a lengthwise direction.

The width of the peripheral region of the support member may be thicker than the central region.

The support member may have a head portion and a body portion, and the width of the head portion may be greater than the width of the body portion.

The shape memory alloy member may comprise a first unit shape memory alloy member and a second unit shape memory alloy member.

The magnet may comprise a first unit magnet and a second unit magnet.

The moving portion comprises a first corner region being connected to the first unit shape memory alloy member and a second corner region adjacent to the first corner region, wherein the first unit magnet may be disposed closer to the second corner region than to the first corner region.

The moving portion comprises a third corner region in a diagonal direction from the first corner region, wherein the second unit shape memory alloy member is connected to the third corner region of the moving portion, and wherein the second unit magnet may be disposed closer to the second corner region than to the third corner region.

The support member may be disposed long in length in the optical axis direction.

The bobbin may move together with the moving portion when the moving portion moves in the optical axis direction.

The support member comprises a body portion, and a first concave portion and a second concave portion being formed to have a narrower width than the body portion, wherein the first concave portion of the support member is coupled to the bobbin, and wherein the second concave portion of the support member may be coupled to the moving portion.

The width of the first and second concave portions may be a width in a direction perpendicular to the lengthwise direction of the support member.

The body portion of the support member may be disposed between the first and second concave portions, and the body portion may comprise a portion that becomes wider as it moves away from the first and second concave portions.

The support member comprises: a first fixed portion being extended from the first concave portion to the opposite side of the body portion and being formed to have a wider width than the first concave portion; and a second fixed portion being extended from the second concave portion to the opposite side of the body portion and being formed to have a wider width than the second concave portion, wherein the first concave portion is disposed at a higher position than the second concave portion, wherein the first fixed portion is coupled to the bobbin, and wherein the second fixed portion may be coupled to the moving portion.

An upper surface of the support member may be coupled to the bobbin, and a lower surface of the support member may be coupled to the moving portion.

The support member may comprise an elastomer.

The fixed portion comprises a base and a substrate being disposed in the base, wherein the magnet is disposed on an outer circumferential surface of the bobbin, and wherein the coil may be disposed in the substrate.

The moving portion comprises: a lower plate being disposed between the bobbin and the base in the optical axis direction; and a sidewall being protruded from an upper surface of the lower plate, wherein the sidewall of the moving portion comprises a hole or groove, and wherein the magnet may be disposed in the hole or a groove of the moving portion.

The moving portion may not be disposed between the magnet and the coil so that the magnet and the coil directly face each other.

The shape memory alloy member comprises a shape memory alloy wire, wherein the shape memory alloy wire has one end and the other end fixed to the fixed portion, and wherein a portion between the one end and the other end may be caught in the moving portion.

The moving portion comprises: a lower plate being disposed between the bobbin and the fixed portion in the optical axis direction; and a sidewall being protruded from an upper surface of the lower plate, wherein the moving portion may comprise a protrusion formed to protrude from the outer circumferential surface of the sidewall of the moving portion, and a groove formed to open downwardly to the protrusion to receive the shape memory alloy wire.

The protrusion of the moving portion may be formed at a corner of the moving portion, and the groove of the moving portion may be spaced apart from the outer circumferential surface of the sidewall.

The groove of the moving portion comprises a first surface being in contact with the shape memory alloy wire, wherein the first surface of the groove of the moving portion may comprise a plane being disposed in a direction perpendicular to the optical axis direction.

The first surface of the groove of the moving portion may comprise: a first chamfered surface being extended inclinedly from a first portion of the plane toward the one end of the shape memory alloy wire; and a second chamfered surface being extended inclinedly from a second portion of the plane toward the other end of the shape memory alloy wire.

The coil comprises: a first coil being disposed in a first direction perpendicular to the optical axis direction; and a second coil being disposed in a second direction perpendicular to the optical axis direction and the first direction, wherein the magnet comprises a first magnet facing the first coil, and a second magnet facing the second coil, and wherein each of the first magnet and the second magnet may comprise two magnets being spaced apart from each other.

The lens driving device comprises: a first Hall sensor detecting the first magnet; a second Hall sensor detecting the second magnet; and a driver IC for controlling a current being applied to the shape memory alloy member, wherein the fixed portion comprises a substrate electrically connected to the coil and comprising a plurality of terminals, wherein the plurality of terminals of the board may comprise: four terminals being electrically connected to the driver IC; two terminals being connected to the first coil; two terminals being connected to the second coil; four terminals being connected to the first Hall sensor; and four terminals being connected to the second Hall sensor.

A camera module according to a first embodiment of the present invention may comprise: a printed circuit board; an image sensor being disposed in the printed circuit board; the lens driving device being disposed in the printed circuit board; and a lens being coupled to the bobbin of the lens driving device.

An optical device according to a first embodiment of the present invention comprises: a main body; the camera module disposed on the main body; and a display disposed on the main body and outputting an image photographed by the camera module.

A lens driving device according to a first embodiment of the present invention comprises: a fixed portion; a moving portion moving in an optical axis direction with respect to the fixed portion; a bobbin being disposed inside the moving portion; a driving unit for moving the bobbin in a direction perpendicular to the optical axis direction; a support member being coupled to the bobbin and the moving portion; and a shape memory alloy member being coupled to the fixed portion and the moving portion, wherein the support member may comprise regions having different widths.

The width of the peripheral region of the support member may be thicker than the central region.

The support member may have a head portion and a body portion, and the width of the head portion may be greater than the width of the body portion.

The shape memory alloy member comprises a first unit shape memory alloy member being coupled to a first corner region of the moving portion, and the driving unit may comprise a first unit driving unit adjacent to a second corner region adjacent to the first corner region than to the first corner region.

The first unit driving unit may comprise a first magnet being disposed in the bobbin and a first coil being disposed in the fixed portion and facing the first magnet.

A lens driving device according to a first embodiment of the present invention comprises: a fixed portion; a moving portion moving in an optical axis direction with respect to the fixed portion; a bobbin disposed inside the moving portion; a driving unit for moving the bobbin in a direction perpendicular to the optical axis direction; a support member for supporting the bobbin; and a shape memory alloy member for coupling with the fixed portion and the moving portion, wherein the shape memory alloy member comprises a first unit shape memory alloy member coupled to a first corner region of the moving portion, and wherein the driving unit may comprise a first unit driving unit adjacent to a second corner region adjacent to the first corner region rather than to the first corner region.

The shape memory alloy member may comprise a second unit shape memory alloy member being coupled to the first corner region of the moving portion and a third corner region of the moving portion in a diagonal direction.

The driving unit may comprise a second unit driving unit adjacent to a fourth corner region adjacent to the third corner region rather than the third corner region.

The support member may comprise a non-metallic material.

The first unit driving unit may comprise a first magnet being disposed in the bobbin and a first coil being disposed in the fixed portion and facing the first magnet.

A lens driving device according to a second embodiment of the present invention comprises: a housing; a bobbin being disposed inside the housing; a coil and a magnet for moving the bobbin in an optical axis direction; and a support member connecting the housing and the bobbin, wherein the bobbin comprises a groove being formed on an outer surface of the bobbin, and wherein the support member may comprise a first fixed portion being fixed inside the groove of the bobbin.

The housing may comprise a groove being formed on an inner surface of the housing, and the support member may comprise a second fixed portion being fixed inside the groove of the housing.

The support member comprises a connection portion connecting the first fixed portion and the second fixed portion, and the connection portion may be formed to have a width smaller than the width of the first fixed portion and the second fixed portion at a portion being connected to the first fixed portion and the second fixed portion.

The width of the connection portion may be the length in a direction perpendicular to the lengthwise of the connection portion.

The connection portion may comprise a portion whose width increases as it moves away from the first fixed portion and the second fixed portion increases.

An outer surface of the connection portion may comprise a curved surface.

The groove of the bobbin is extended from an upper surface of the bobbin, and the groove of the housing may be extended from an upper surface of the housing.

The groove of the bobbin may comprise a locking protrusion spaced apart by a width smaller than the width of the first fixed portion so that the first fixed portion is caught.

The groove of the housing may comprise a locking protrusion being spaced apart by a width smaller than the width of the second fixed portion so that the second fixed portion is caught.

The magnet is disposed in the bobbin and the coil may be disposed on the housing.

The lens driving device may comprise: a base being disposed below the housing; a first substrate being disposed in the base; and a shape memory alloy member connecting the housing and the first substrate.

The shape memory alloy member comprises: a first coupling part being coupled to the housing; a second coupling part being coupled to the first substrate; a shape memory alloy wire for connecting the first coupling part and the second coupling part, wherein the shape memory alloy wire may change in length when a current is applied.

The shape memory alloy member comprises a conductive wire connecting the first coupling portion and the first substrate, wherein the shape memory alloy wire may comprise a first shape memory alloy wire being disposed in a first direction perpendicular to the optical axis direction, and a second shape memory alloy wire being disposed in a second direction perpendicular to the optical axis direction and the first direction.

The shape memory alloy wire comprises first to fourth shape memory alloy wires, wherein the first substrate may comprise first to fourth terminals being connected to each of the first to fourth shape memory alloy wires and a fifth terminal being commonly connected to the first to fourth shape memory alloy wires.

It may comprise a bearing being disposed between the housing and the base or the housing and the first substrate to be in contact with the housing when the housing moves in a direction perpendicular to the optical axis direction.

It comprises an elastic member being coupled to an upper surface of the base and an upper surface of the housing, wherein the elastic member may press the housing in a direction toward the bearing.

It comprises a second substrate being disposed in a side surface of the base and electrically connected to the first substrate, wherein the elastic member comprises first and second elastic members being spaced apart from each other, and wherein the coil may be electrically connected to the second substrate through the first and second elastic members.

The support member may be formed of an elastomer.

The camera module according to the second embodiment of the present invention may comprise: a printed circuit board; an image sensor being disposed in the printed circuit board; the lens driving device being disposed in the printed circuit board; and a lens being coupled to the bobbin of the lens driving device.

An optical device according to a second embodiment of the present invention may comprise: a main body; the camera module being disposed in the main body; and a display being disposed in the main body and outputting an image being photographed by the camera module.

A lens driving device according to a second embodiment of the present invention comprises: a housing; a bobbin being disposed inside the housing; a coil and a magnet for moving the bobbin in an optical axis direction; and a support member connecting the housing and the bobbin, wherein a groove being formed in an outer surface of at least one of the bobbin and the housing is comprised, and wherein the support member may comprise a fixed portion being fixed inside the groove.

### [Advantageous Effects]

Through the first embodiment of the present invention, deformation of the OIS support member for supporting the OIS driving of the large- aperture lens can be prevented. Through this, OIS driving of the large- aperture lens may be smoothly performed.

In addition, the AF driving using the SMA can be performed through the first embodiment of the present invention.

Through the second embodiment of the present invention, the deformation of the AF support member for supporting AF driving of the large aperture lens can be prevented. Through this, AF driving of the large aperture lens can be performed smoothly.

In addition, OIS driving using SMA may be performed.

### [Brief Description of Drawings]

FIG. 1 is a perspective view of a lens driving device according to a first embodiment of the present invention.
FIG. 2 is a view of a lens driving device according to a first embodiment of the present invention as viewed from a different direction from that of FIG. 1.
FIG. 3 is a cross-sectional view taken along line A-A of FIG. 1.
FIG. 4 is a cross-sectional view taken along line B-B of FIG. 1.
FIG. 5 is an exploded perspective view of a lens driving device according to a first embodiment of the present invention.
FIG. 6 is an exploded perspective view of the lens driving device according to the first embodiment of the present invention, as viewed from a different direction from that of FIG. 5.
FIG. 7 is a perspective view illustrating a state in which a cover member is removed from the lens driving device of FIG. 1.
FIG. 8 is a plan view of a state in which a substrate is removed from the lens driving device of FIG. 7.
FIG. 9a is a plan view illustrating a state in which a base is removed from the lens driving device of FIG. 8.
FIG. 9b is a diagram illustrating a coupling structure among a coil, a shape memory alloy member, and a substrate in a lens driving device according to a first embodiment of the present invention.
FIG. 10 is a perspective view and an enlarged view illustrating a bobbin and related configuration of a lens driving device according to a first embodiment of the present invention.
FIG. 11 is a perspective view and an enlarged view illustrating a housing and related configuration of a lens driving device according to a first embodiment of the present invention.
FIG. 12 is a partial see-through plan view of a part of the lens driving device according to a first embodiment of the present invention.
FIG. 13 is a partial see-through perspective view of a part of the lens driving device according to a first embodiment of the present invention.
FIG. 14 is a view illustrating a coupling structure of a shape memory alloy member and a housing of a lens driving device according to a first embodiment of the present invention.
FIG. 15 is a perspective view illustrating a coupling structure of a shape memory alloy member and a housing of a lens driving device according to a first embodiment of the present invention.
FIG. 16 is an enlarged perspective view of a portion being coupled to a shape memory alloy member in a housing of a lens driving device according to a first embodiment of the present invention.
FIG. 17 is a cross-sectional view of a part of the lens driving device according to a first embodiment of the present invention.
FIG. 18 is an exploded perspective view of the camera device according to a first embodiment of the present invention.
FIG. 19 is a perspective view illustrating an optical device according to a first embodiment of the present invention.
FIG. 20 is a block diagram of an optical device according to a first embodiment of the present invention.
FIG. 21 is a perspective view of a lens driving device according to a second embodiment of the present invention.
FIG. 22 is a cross-sectional view taken along line A-A of FIG. 21.
FIG. 23 is a cross-sectional view taken along line B-B of FIG. 21.
FIG. 24a is a cross-sectional view taken along line C-C of FIG. 21 and a partially enlarged view.
FIG. 24b is an enlarged view illustrating the coupling structure of a support member and a bobbin according to a second embodiment of the present invention.
FIG. 24c is an enlarged view illustrating the coupling structure of a support member and a housing according to a second embodiment of the present invention.
FIG. 24d is a plan view of a support member according to a second embodiment of the present invention.
FIG. 24e is a plan view of a support member according to a modified embodiment.
FIG. 25 is an exploded perspective view of a lens driving device according to a second embodiment of the present invention.
FIG. 26 is a perspective view illustrating a state in which a cover member of a lens driving device according to a second embodiment of the present invention is removed.
FIG. 27 is a plan view illustrating a state in which a cover member of a lens driving device according to a second embodiment of the present invention is removed.
FIG. 28 is a perspective view illustrating a first mover and a second mover of a lens driving device according to a second embodiment of the present invention.
FIG. 29 is a perspective view illustrating a coupling state of a first mover, a second mover, an elastic member, and a second substrate of a lens driving device according to a second embodiment of the present invention.
FIG. 30 is a perspective view illustrating a first substrate, a second substrate, and a shape memory alloy member of the lens driving device according to a second embodiment of the present invention.
FIG. 31a is a view for explaining the driving of a shape memory alloy member of a lens driving device according to a second embodiment of the present invention.
FIG. 31b is a view illustrating a coupling structure of a shape memory alloy member and a housing according to a second embodiment of the present invention.
FIG. 32 is a side view illustrating a state in which a cover member of a lens driving device according to the second embodiment of the present invention is removed.
FIG. 33 is a view for explaining a housing, a bearing, and related structures of a lens driving device according to a second embodiment of the present invention.
FIG. 34 is a view for explaining the coupling structure of a shape memory alloy member of a lens driving device according to a second embodiment of the present invention.
FIG. 35 is an exploded perspective view of a camera device according to a second embodiment of the present invention.
FIG. 36 is a perspective view illustrating an optical device according to a second embodiment of the present invention.
FIG. 37 is a block diagram of an optical device according to a second embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or disposed in "on (above)" or "below (under)" of each component, "on (above)" or "below (under)" means that it comprises not only the case where the two components are directly in contact with, but also the case where one or more other components are formed or disposed between the two components. In addition, when expressed as "on (above)" or "below (under)", the meaning of not only an upward direction but also a downward direction based on one component may be comprised.

An 'optical axis direction' used hereinafter is defined as an optical axis direction of a lens and/or an image sensor being coupled to a lens driving device.

The 'vertical direction' used hereinafter may be a direction parallel to the optical axis direction. The vertical direction may correspond to the 'z-axis direction'. The 'horizontal direction' used hereinafter may be a direction perpendicular to the vertical direction. That is, the horizontal direction may be a direction perpendicular to the optical axis. Accordingly, the horizontal direction may comprise an 'x-axis direction' and a 'y-axis direction'.

The 'auto focus (AF) function' used hereinafter is defined as a function to automatically focus on a subject by adjusting the distance from the image sensor by moving the lens in an optical axis direction according to the distance of the subject so that the image sensor can obtain a clear image of the subject.

The 'optical image stabilization (OIS) function' used hereinafter is defined as the function of moving or tilting the lens in a direction perpendicular to the optical axis to cancel the vibration (movement) generated in the image sensor by external force.

Hereinafter, a configuration of a lens driving device according to a first embodiment of the present invention will be described with reference to the drawings.

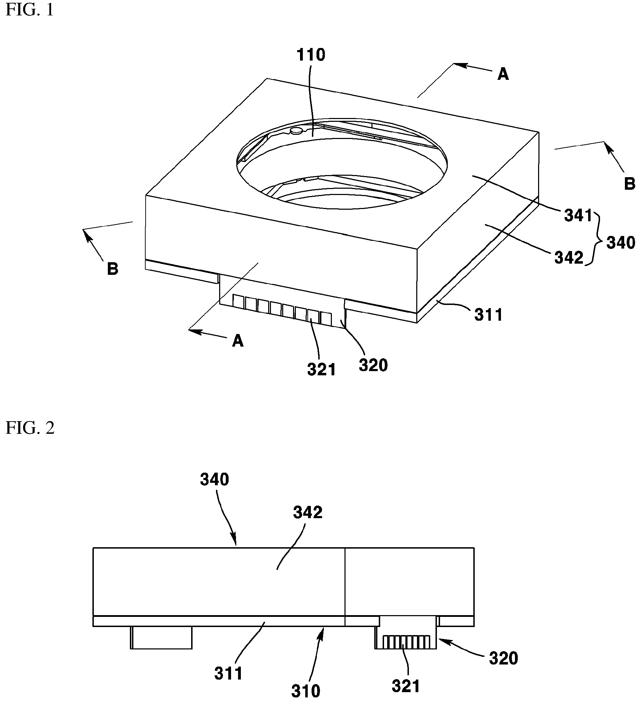

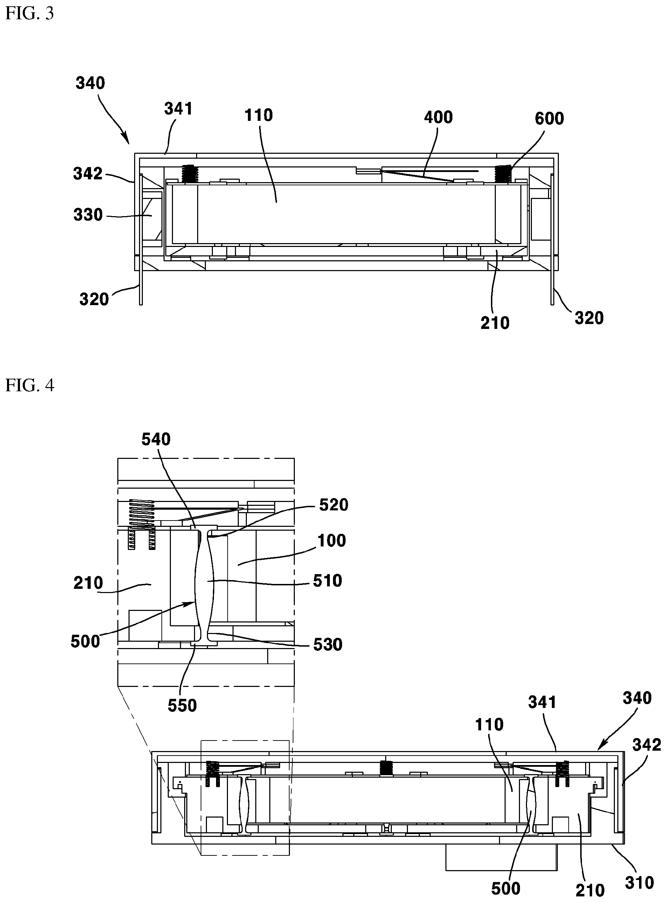

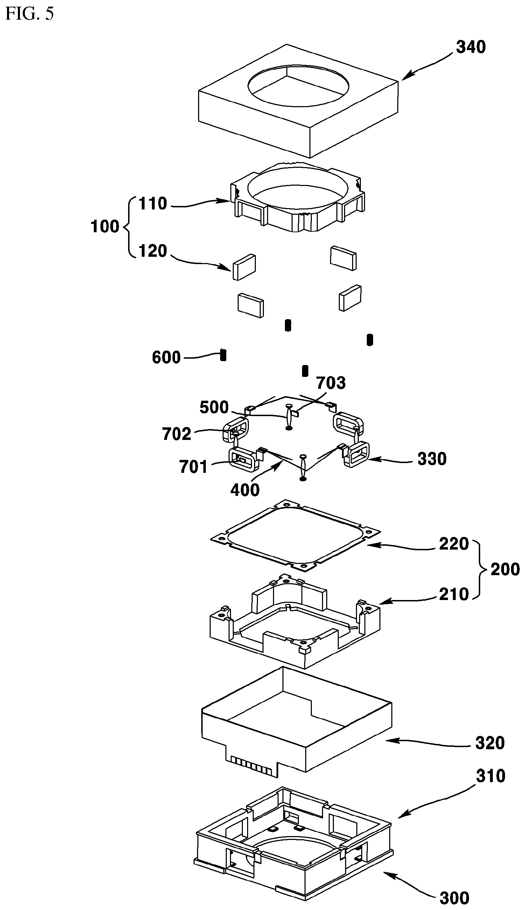

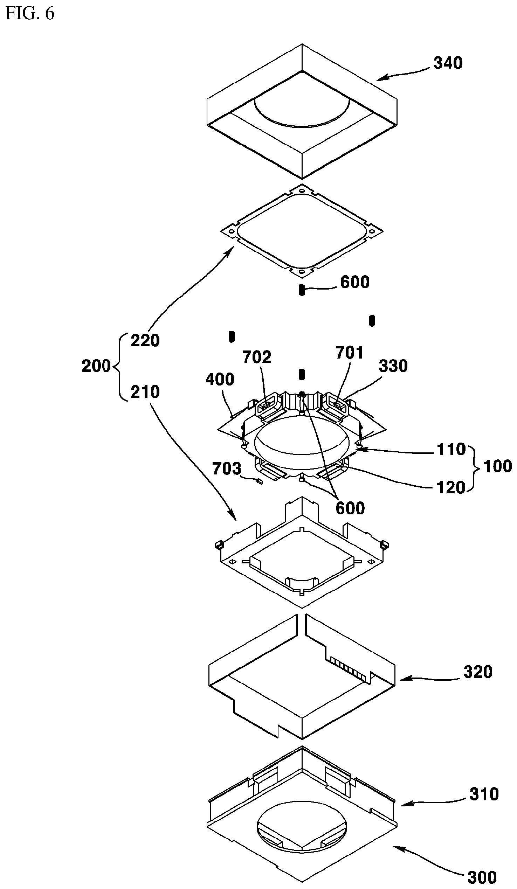

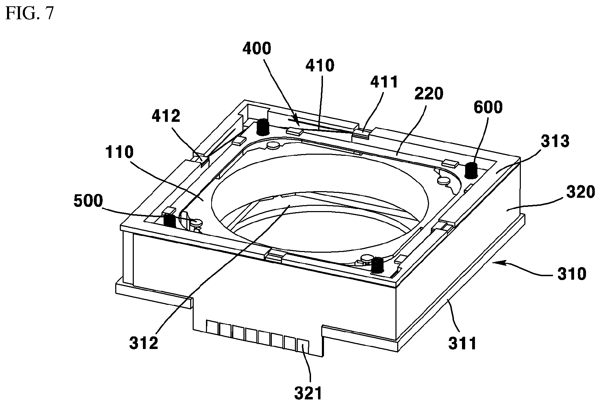

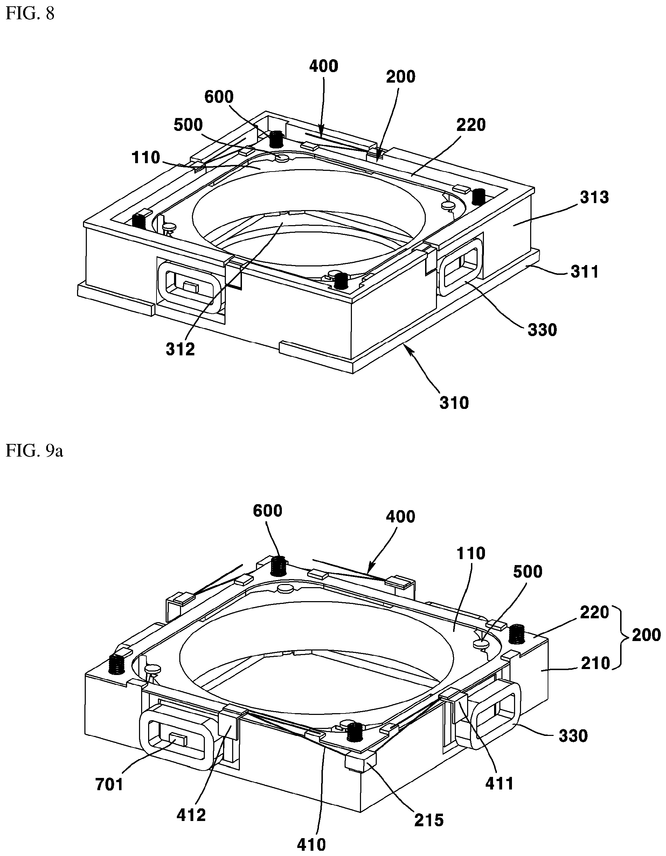

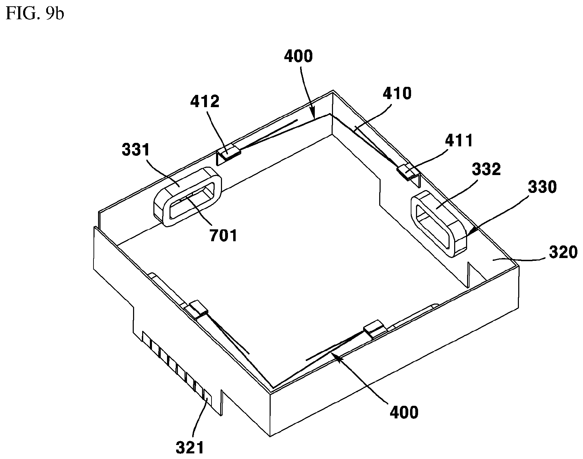

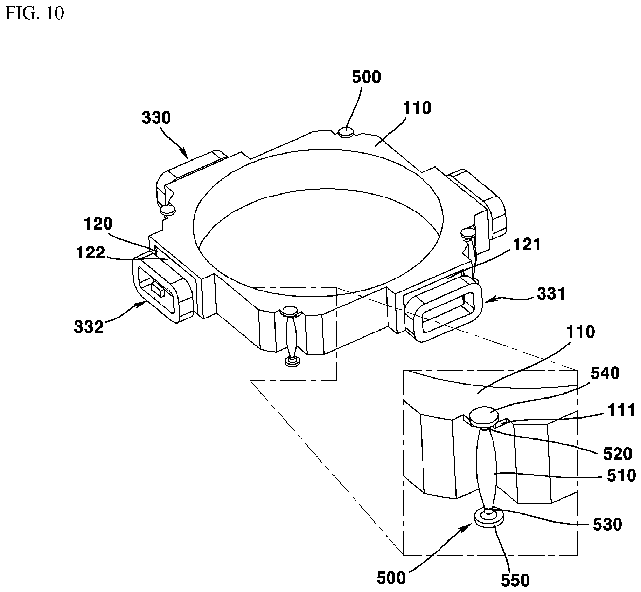

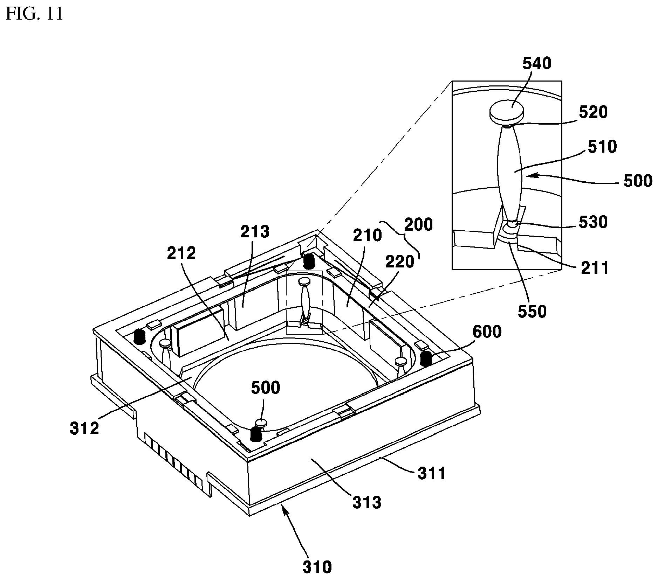

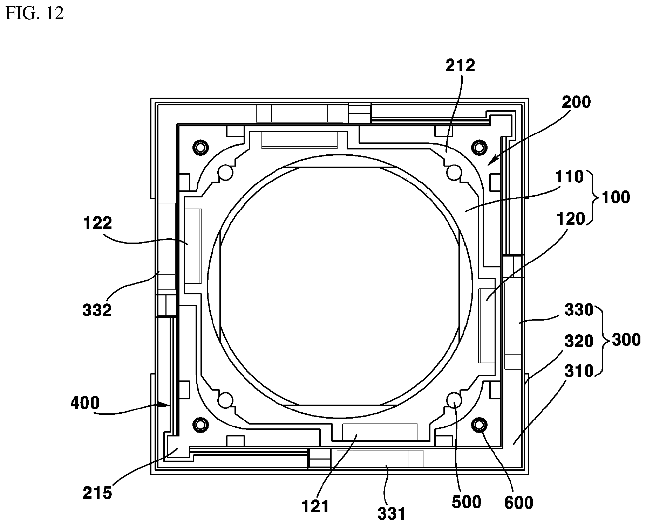

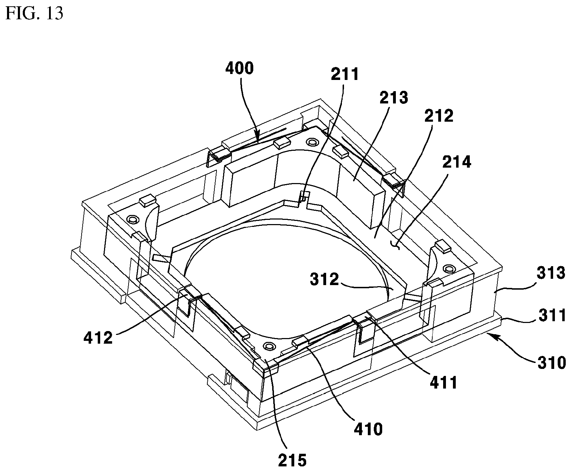

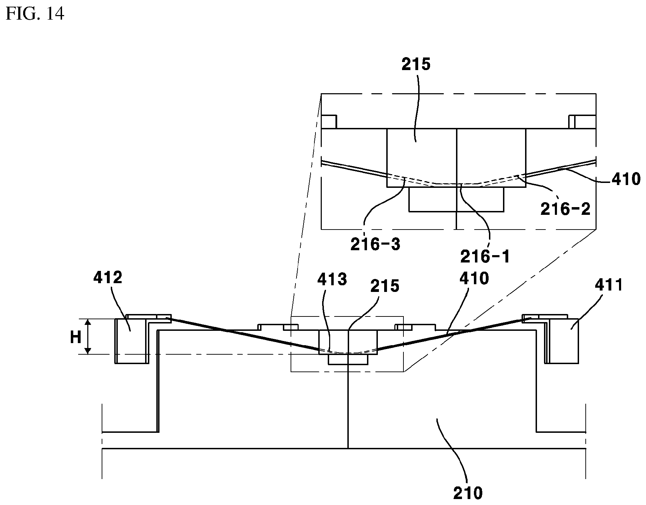

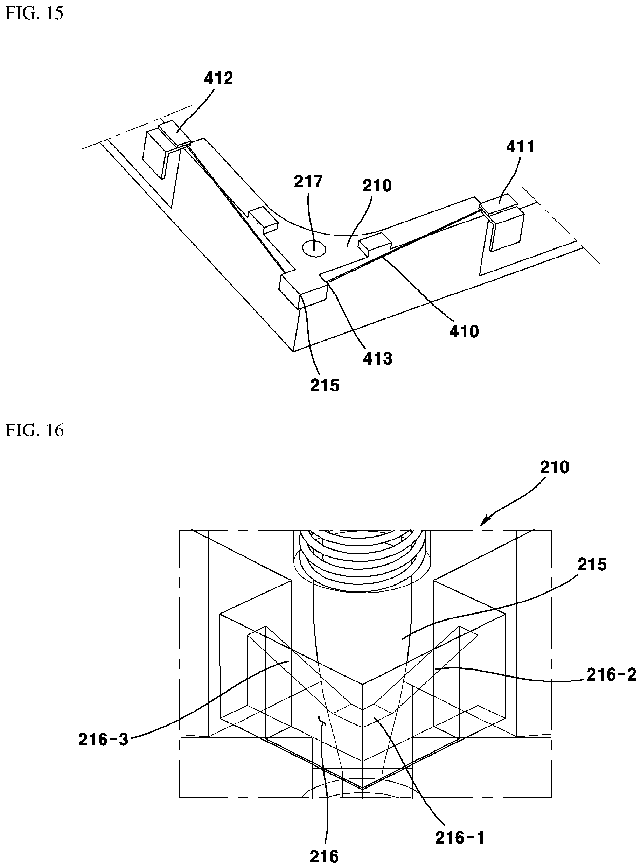

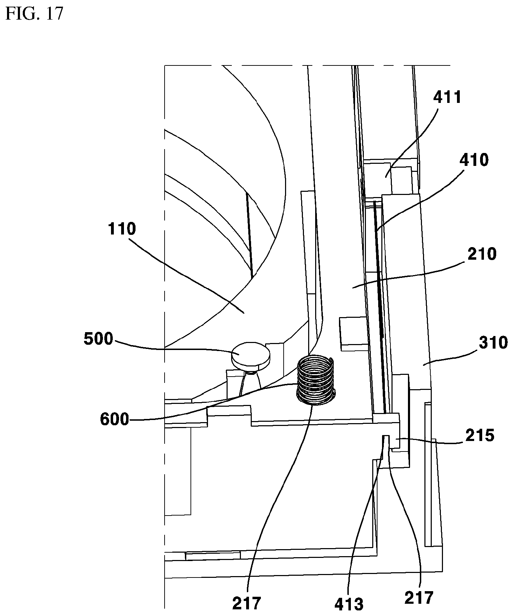

FIG. 1 is a perspective view of a lens driving device according to a first embodiment of the present invention; FIG. 2 is a view of a lens driving device according to a first embodiment of the present invention as viewed from a different direction from that of FIG. 1; FIG. 3 is a cross-sectional view taken along line A-A of FIG. 1; FIG. 4 is a cross-sectional view taken along line B-B of FIG. 1; FIG. 5 is an exploded perspective view of a lens driving device according to a first embodiment of the present invention; FIG. 6 is an exploded perspective view of the lens driving device according to the first embodiment of the present invention, as viewed from a different direction from that of FIG. 5; FIG. 7 is a perspective view illustrating a state in which a cover member is removed from the lens driving device of FIG. 1; FIG. 8 is a plan view of a state in which a substrate is removed from the lens driving device of FIG. 7; FIG. 9a is a plan view illustrating a state in which a base is removed from the lens driving device of FIG. 8; FIG. 9b is a diagram illustrating a coupling structure among a coil, a shape memory alloy member, and a substrate in a lens driving device according to a first embodiment of the present invention; FIG. 10 is a perspective view and an enlarged view illustrating a bobbin and related configuration of a lens driving device according to a first embodiment of the present invention; FIG. 11 is a perspective view and an enlarged view illustrating a housing and related configuration of a lens driving device according to a first embodiment of the present invention; FIG. 12 is a partial see-through plan view of a part of the lens driving device according to a first embodiment of the present invention; FIG. 13 is a partial see-through perspective view of a part of the lens driving device according to a first embodiment of the present invention; FIG. 14 is a view illustrating a coupling structure of a shape memory alloy member and a housing of a lens driving device according to a first embodiment of the present invention; FIG. 15 is a perspective view illustrating a coupling structure of a shape memory alloy member and a housing of a lens driving device according to a first embodiment of the present invention; FIG. 16 is an enlarged perspective view of a portion being coupled to a shape memory alloy member in a housing of a lens driving device according to a first embodiment of the present invention; and FIG. 17 is a cross-sectional view of a part of the lens driving device according to a first embodiment of the present invention.

The lens driving device **10** may be a voice coil motor (VCM). The lens driving device **10** may be a lens driving motor. The lens driving device **10** may be a lens driving actuator. The lens driving device **10** may comprise an AF module. The lens driving device **10** may comprise an OIS module.

The lens driving device **10** may comprise a first mover **100.** The first mover **100** may be coupled with a lens. The first mover **100** may be connected to the second mover **200** through the support member **500.** The first mover **100** may move through interaction with the stator **300.** At this time, the first mover **100** may move integrally with the lens. Meanwhile, the first mover **100** can move during OIS driving. At this time, the first mover **100** may be referred to as an 'OIS mover'. However, the first mover **100** may move together with the second mover **200** even during AF driving.

The lens driving device **10** may comprise a bobbin **110.** The first mover **100** may comprise a bobbin **110.** The bobbin **110** may be disposed inside the housing **210.** The bobbin **110** may be disposed in a hole of the housing **210.** The bobbin **110** may be movably coupled to the housing **210.** The bobbin **110** may move in a direction perpendicular to the optical axis inside the housing **210.** The bobbin **110** may move in a direction perpendicular to the optical axis by the coil **330** and the magnet **120.** A lens may be coupled to the bobbin **110.** The bobbin **110** and the lens may be coupled by screw-coupling and/or an adhesive. A magnet **120** may be disposed in the bobbin **110.** Or, in a modified embodiment, the coil **330** may be disposed in the bobbin **110.**

In a first embodiment of the present invention, the bobbin **110** may move together with the housing **210** when the housing **210** moves in the optical axis direction. However, when the bobbin **110** moves in a direction perpendicular to the optical axis direction, the housing **210** is fixed and only the bobbin **110** can be moved.

The bobbin **110** may comprise a groove **111.** The groove **111** may be formed at an outer surface of the bobbin **110.** The groove **111** of the bobbin **110** may be formed in a protrusion being protruded from an upper portion of the bobbin **110.** The groove **111** of the bobbin **110** may be opened to the outside of the bobbin **110.** A support member **500** may be coupled to the groove **111** of the bobbin **110.** The first concave portion **520** of the support member **500** may be hooked and fixed to the groove **111** of the bobbin **110.** A support member **500** may be inserted into the groove **111** of the bobbin **110** from the outside. A groove **111** of the bobbin **110** may be formed as a hole. In this case, at least a portion of the support member **500** may be disposed to penetrate through the hole of the bobbin **110.** The hole or groove **111** of the bobbin **110** may be coupled to the first concave portion **520** of the support member **500.**

The lens driving device **10** may comprise a magnet **120.** The first mover **100** may comprise a magnet **120.** The magnet **120** may be disposed in the bobbin **110.** Or, in a modified embodiment, the magnet **120** may be disposed in the base **310.** In this case, the coil **330** may be disposed in the bobbin **111.** The magnet **120** may be disposed at an outer side surface or an outer circumferential surface of the bobbin **110.** The magnet **120** may be fixed to the bobbin **110** by an adhesive. The magnet **120** may be overlapped with the bobbin **110** in an optical axis direction. The magnet **120** may be overlapped with the housing **210** in an optical axis direction. The magnet **120** may face the coil **330.** The magnet **120** may electromagnetically interact with the coil **330.** The magnet **120** may move the bobbin **110** in a direction perpendicular to the optical axis through interaction with the coil **330.** The magnet **120** may be used during OIS driving. The magnet **120** may be disposed at a side surface of the bobbin **110.** The magnet **120** may be a flat magnet having a flat plate shape.

The magnet **120** may be disposed in any one of the bobbin **110** and the fixed portion. The coil **330** may be disposed in the other one of the bobbin **110** and the fixed portion. The coil **330** and the magnet **120** may move the bobbin **110** in a direction perpendicular to the optical axis direction with respect to the moving portion.

The magnet **120** may comprise a plurality of magnets. The magnet **120** may comprise four magnets. The magnet **120** may comprise a first magnet **121** and a second magnet **122.** The magnet **120** may comprise two first magnets **121** and two second magnets **122.** The magnet **120** may comprise a first magnet **121** facing the first coil **331** and a second magnet **122** facing the second coil **332.** Each of the first magnet **121** and the second magnet **122** may comprise two magnets being spaced apart from each other and symmetrical to the optical axis.

The lens driving device **10** may comprise a second mover **200.** The second mover **200** may be disposed inside the stator **300.** The second mover **200** may be disposed in a suspended state by being caught by the shape memory alloy member **400** inside the stator **300.** The second mover **200** may be pressed downward by the elastic member **600.** The second mover **200** may support the first mover **100** through the support member **500.** The second mover **200** may support the movement of the first mover **100** or may move together with the first mover **100.** In more detail, the second mover **200** moves together with the first mover **100** when moving in an optical axis direction, and it may support the movement of the first mover **100** in a relatively fixed state when the first mover **100** moves in a direction perpendicular to the optical axis. The second mover **200** may move through the shape memory alloy member **400.** The second mover **200** may move during AF driving. At this time, the second mover **200** may be referred to as an 'AF mover'. The second mover **200** may move integrally with the first mover **100** during AF driving.

The lens driving device **10** may comprise a housing **210.** The housing **210** may be a 'moving portion'. The second mover **200** may comprise a housing **210.** The housing **210** may be disposed on the base **310.** The housing **210** may be disposed inside the base **310.** The housing **210** may be spaced apart from the base **310.** The housing **210** may be disposed outside the bobbin **110.** The housing **210** may accommodate at least a portion of the bobbin **110.** The housing **210** may be disposed inside the cover member **340.** The housing **210** may be disposed between the cover member **340** and the bobbin **110.** The housing **210** may be formed of a material different from that of the cover member **340.** The housing **210** may be formed of an insulating material. The housing **210** may be formed of an injection mold material.

The housing **210** may comprise four side portions and four corner portions disposed between the four side portions. The side portion of the housing **210** may comprise: a first side portion; a second side portion being disposed opposite to the first side portion; a third side portion being disposed opposite to each other between the first side portion and the second side portion; and a fourth side portion. The corner portion of the housing **210** may comprise: a first corner portion being disposed between the first side portion and the third side portion; a second corner portion being disposed between the first side portion and the fourth side portion; a third corner portion being disposed between the second side portion and the third side portion; and a fourth corner portion being disposed between the second side portion and the fourth side portion. The side portion of the housing **210** may comprise a 'sidewall **213'.** The housing **210** may comprise a sidewall **213.** The sidewall **213** may comprise a sidewall **213** being protruded from an upper surface of the lower plate **212.**

The housing **210** may comprise a groove **211.** The groove **211** may be formed in an inner surface of the housing **210.** The groove **211** may be formed in the protrusion being protruded from a lower portion of the housing **210.** The groove **211** may be opened toward the inner side of the housing **210.** A support member **500** may be coupled to the groove **211.** A second concave portion **530** of the support member **500** may be caught by and fixed to the groove **211.** A support member **500** may be inserted into the groove **211** from the inside. The groove **211** may be formed as a hole. In this case, at least a portion of the support member **500** may be disposed to pass through the hole of the housing **210.** The hole or groove **211** of the housing **210** may be coupled to the second concave portion **530** of the support member **500.**

In a first embodiment of the present invention, the protrusion of the bobbin **110** is disposed at an upper portion and the protrusion of the housing **210** is disposed at a lower portion so that the support member **500** may connect the protrusion of the bobbin **110** and the protrusion of the housing **210.** At this time, the protrusion of the bobbin **110** may be overlapped with the protrusion of the housing **210** in an optical axis direction. In addition, the protrusion of the bobbin **110** may be disposed above the protrusion of the housing **210** in an optical axis direction. The protrusion of the bobbin **110** may be coupled to the first concave portion **520** of the support member **500.** The protrusion of the housing **120** may be coupled to the second concave portion **530** of the support member **500.** Or, conversely, the protrusion of the bobbin **110** may be disposed at a lower portion and the protrusion of the housing **210** may be disposed at an upper portion. At this time, the protrusion of the housing **210** is coupled with the first concave portion **520** of the support member **500,** and the protrusion of the bobbin **110** may be coupled to the second concave portion **530** of the support member **500.**

The housing **210** may comprise a lower plate **212.** The lower plate **212** may be disposed between the bobbin **110** and the base **310** in an optical axis direction. The lower plate **212** may be disposed in a direction perpendicular to the optical axis direction. The lower plate **212** may be disposed below the bobbin **110.** The support member **500** may be coupled to the lower plate **212** of the housing **210.** The support member **500** may be fixed to the lower plate **212** of the housing **210.**

The housing **210** may comprise a groove **214.** The sidewall **213** of the housing **210** may comprise a hole or groove **214.** The groove **214** may be formed alone. The magnet **120** may be disposed in a hole or groove **214** of the housing **210.** Through this, in the first embodiment of the present invention, the housing **210** may not be disposed between the magnet **120** and the coil **330** so that the magnet **120** and the coil **330** directly face each other. That is, the housing **210** may comprise an avoiding structure for minimizing a gap between the magnet **120** and the coil **330.**

The housing **210** may comprise a protrusion **215.** The protrusion **215** may be formed to be protruded from an outer circumferential surface of the sidewall **213** of the housing **210.** The protrusion **215** may be formed at a corner of the housing **210.** The protrusion **215** may be coupled with a shape memory alloy member **400.** The protrusion **215** may be formed at an upper portion of the housing **210.** The base **310** may comprise a groove formed at an inner circumferential surface of the base **310** to prevent interference with the protrusion **215** of the housing **210.**

The housing **210** may comprise a groove **216.** The groove **216** may be formed to be open downwardly in the protrusion **215.** A shape memory alloy wire **410** may be caught in the groove **216.** The groove **216** of the housing **210** may be spaced apart from the outer circumferential surface of the sidewall **213.** In the first embodiment of the present invention, an injection molded product on which the shape memory alloy wire **410** is caught may be formed in a two-stage structure. When the groove **216** is attached to the housing **210,** the housing **210** and the shape memory alloy wire **410** may interfere with each other during AF driving, so a distance from the sidewall **213** of the housing **210** may be provided. By the way, the reason why the height of the outer end is low may be to facilitate assembly of the shape memory alloy wire **410.**

The groove **216** of the housing **210** may comprise a first surface in contact with the shape memory alloy wire **410.** The first surface of the groove **216** of the housing **210** may comprise a planar surface **216-1** being disposed perpendicular to the optical axis direction. The first surface of the groove **216** of the housing **210** may comprise: a first chamfered surface **216-2** being inclinedly extended from the first portion of the planar surface **216-1** toward one end of the shape memory alloy wire **410;** and a second chamfered surface **216-3** being inclinedly extended from the second portion of the planar surface **216-1** toward the other end of the shape memory alloy wire **410.** The first surface of the groove **216** of the housing **210** may comprise any one or more among a planar surface **216-1,** a first chamfered surface **216-2,** and a second chamfered surface **216-3.** That is, at least one among the planar surface **216-1,** the first chamfered surface **216-2,** and the second chamfered surface **216-3** may be omitted. In a first embodiment of the present invention, a chamfer may be formed in a portion where the shape memory alloy wire **410** is caught in the groove **216** of the housing **210.** Since a stroke that can be implemented becomes shorter as the straight part lengthens in the groove **216** of the housing **210,** chamfering may be applied according to the angle of the shape memory alloy wire **410.** In this way, the straight line portion can be minimized.

The housing **210** may comprise a groove **217.** The groove **217** may be formed at an upper surface of the housing **210.** An elastic member **600** may be disposed in the groove **217.** The groove **217** may comprise a shape corresponding to the shape of at least a portion of the elastic member **600.** A portion of the elastic member **600** may be inserted into the groove **217.** Through this, it is possible to prevent the elastic member **600** from being separated from the groove **217** of the housing **210.**

The lens driving device **10** may comprise a yoke **220.** The second mover **200** may comprise a yoke **220.** The yoke **220** may be disposed at an upper surface of the housing **210.** An attractive force may act between the yoke **220** and the magnet **120.** In a state where no current is applied to the coil **330,** the magnet **120** may be fixed at a position as close to the yoke **220** as possible. That is, the yoke **220** may provide an attractive force so that the magnet **120** can return to its original position in a state where no current is applied to the coil **330.**

The lens driving device **10** may comprise a stator **300.** The stator **300** may accommodate the first and second movers **100** and **200** therein. The stator **300** may comprise a relatively fixed configuration even when any one or more of the first and second movers **100** and **200** moves. The stator **300** may movably support the second mover **200.** The stator **300** may move the first and second movers **100** and **200.** The stator **300** may comprise a 'fixed portion'. The fixed portion may comprise a base **310** and a substrate **320.**

The lens driving device **10** may comprise a base **310.** The stator **300** may comprise a base **310.** The base **310** may be disposed below the housing **210.** The base **310** may accommodate at least a portion of the housing **210** therein. A substrate **320** may be disposed at an outer circumferential surface of the base **310.** The base **310** may be coupled to the cover member **340.** The base **310** may be disposed on the printed circuit board **50.**

The base **310** may comprise a step **311.** The step **311** may be formed at a side surface of the base **310.** The step **311** may be formed at a lower end of the base **310.** The step **311** may be formed to be protruded from an outer circumference of the base **310.** The side plate **342** of the cover member **340** may be seated on the step **311.**

The base **310** may comprise a lower plate **312.** The lower plate **312** may be disposed below the housing **210.** The lower plate **312** may be disposed parallel to the lower plate **212** of the housing **210.** The lower plate **312** may be disposed in a direction perpendicular to the optical axis direction.

The base **310** may comprise a sidewall **313.** The sidewall **313** may be protruded upward from the lower plate **312.** The sidewall **313** may comprise a plurality of sidewalls. The sidewall **313** may comprise four sidewalls. A hole or groove in which the coil **330** is disposed may be formed in the sidewall **313** of the base **310.** The coil **330** may be disposed at the sidewall **313** of the base **310.**

The lens driving device **10** may comprise a substrate **320.** The stator **300** may comprise a substrate **320.** The substrate **320** may be disposed in the base **310.** The substrate **320** may be electrically connected to the coil **330.** The substrate **320** may be disposed around the outer circumferential surface of the base **310.** The substrate **320** may be electrically connected to the printed circuit board **50** being disposed below the base **310.** The substrate **320** may comprise a flexible printed circuit board (FPCB). The substrate **320** may be bent in some parts.

The substrate **320** may comprise a terminal **321.** The terminal **321** may be formed at a side surface of the substrate **320.** The terminal **321** may be formed at a lower end of the substrate **320.** The terminal **321** of the substrate **320** may be electrically connected to the printed circuit board **50** by a solder or a conductive epoxy.

The substrate **320** may comprise a plurality of terminals **321.** The plurality of terminals **321** may comprise 16 terminals. The plurality of terminals **321** of the substrate **320** may comprise: four terminals being electrically connected to the driver IC **703;** two terminals being connected to the first coil **331;** two terminals being connected to the second coil **332;** four terminals being connected to the first Hall sensor **701;** and four terminals being connected to the second Hall sensor **702.** At this time, one terminal being connected to the first Hall sensor **701** may be used in common with the second Hall sensor **702.** In this case, the terminals for the first Hall sensor **701** and the second Hall sensor **702** may be formed of seven terminals.

In more detail, the four terminals being electrically connected to the driver IC **703** may comprise SDA, SCL, VDD, and GND terminals. The two terminals being connected to the first coil **331** for driving the OIS-X direction may comprise a (+) terminal and a (-) terminal. The terminal connected to the first Hall sensor **701** may comprise a Hall in (+) terminal/ (-) terminal and a Hall out (+) terminal/ (-) terminal. The two terminals being connected to the second coil **332** for driving in an OIS-Y direction may comprise a (+) terminal and a (-) terminal. The terminal being connected to the second Hall sensor **702** may comprise a Hall in (+) terminal/ (-) terminal and a Hall out (+) terminal/ (-) terminal.

The lens driving device **10** may comprise a coil **330.** The stator **300** may comprise a coil **330.** The coil **330** may be an 'OIS driving coil' used for OIS driving. The coil **330** may be disposed in the base **310.** Or, in a modified embodiment, the coil **330** may be disposed in the bobbin **110.** In this case, the magnet **120** may be disposed in the base **310.** The coil 330 may be disposed between the bobbin **110** and the base **310.** The coil **330** may be disposed in a groove or hole being formed at the sidewall **313** of the base **310.** The coil **330** may face the magnet **120.** The coil **330** may be disposed to face the magnet **120.** The coil **330** may electromagnetically interact with the magnet **120.** In this case, when a current is supplied to the coil **330** to form an electromagnetic field around the coil **330,** the magnet **120** may move with respect to the coil **330** by the electromagnetic interaction between the coil **330** and the magnet **120.**

The coil **330** may comprise a plurality of coils. The coil **330** may comprise two coils. The coil **330** may comprise four coils. The coil **330** may comprise a first coil **331** facing the first magnet **121** and a second coil **332** facing the second magnet **122.** The coil **330** may comprise two first coils **331** and two second coils **332.** The two first coils **331** may be electrically connected to each other through the substrate **320.** Or, the two first coils **331** may be electrically isolated from each other. The two second coils **332** may be electrically connected to each other through the substrate **320.** Or, the two second coils **332** may be electrically isolated from each other.

The coil **330** may comprise a first coil **331** being disposed in a first direction perpendicular to the optical axis direction, and a second coil **332** being disposed in a second direction perpendicular to the optical axis direction and the first direction. The first coil **331** may move the bobbin **110** in a second direction. The second coil **332** may move the bobbin **110** in a first direction. Or, the first coil **331** may move the bobbin **110** in a first direction. The second coil **332** may move the bobbin **110** in a second direction.

In a first embodiment of the present invention, the magnet **120** and the coil **330** for OIS may be provided in two sets for each direction (OIS-x direction, OIS-y direction). In a first embodiment of the present invention, since there is no AF magnet, the aforementioned OIS magnet may be disposed. In a first embodiment of the present invention, linearity within the OIS driving region can be improved through the aforementioned two-set magnet and coil structure.

In a first embodiment of the present invention, the coil **330** and the magnet **120** may move the bobbin **110** in a direction perpendicular to the optical axis direction through electromagnetic interaction.

The lens driving device **10** may comprise a cover member **340.** The stator **300** may comprise a cover member **340.** The cover member **340** may comprise a 'cover can'. The cover member **340** may be disposed outside the housing **210.** The cover member **340** may be disposed outside the base **310.** The cover member **340** may be coupled to the base **310.** The cover member **340** may accommodate the housing **210** therein. The cover member **340** may form the outer appearance of the lens driving device **10.** The cover member **340** may have a hexahedral shape with an open lower surface. The cover member **340** may be a non-magnetic material. The cover member **340** may be formed of a metal material. The cover member **340** may be formed of a metal plate. The cover member **340** may be connected to the ground portion of the printed circuit board **50.** Through this, the cover member **340** may be grounded. The cover member **340** may block electromagnetic interference (EMI). At this time, the cover member **340** may be referred to as an 'EMI shield can'.

The cover member **340** may comprise an upper plate **341** and a side plate **342.** The cover member **340** may comprise an upper plate **341** comprising a hole, and a side plate **342** being extended downward from an outer periphery or edge of the upper plate **341.** The lower end of the side plate **342** of the cover member **340** may be disposed at a step portion of the base **310.** The inner surface of the side plate **342** of the cover member **340** may be fixed to the base **310** by an adhesive.

The lens driving device **10** may comprise a shape memory alloy member **400.** The shape memory alloy member **400** may connect the stator **300** and the second mover **200.** The shape memory alloy member **400** may connect the base **310** and the housing **210.** The shape memory alloy member **400** may connect the substrate **320** and the housing **210.** The shape memory alloy member **400** may be coupled to a fixed portion and a moving portion. The shape memory alloy member **400** may move the moving portion in an optical axis direction. The shape memory alloy member **400** has both ends connected to the fixed portion and the central region may be connected to the moving portion.

The shape memory alloy member **400** may be used for AF driving. The shape memory alloy member **400** may move the housing **210** in an optical axis direction. The shape memory alloy member **400** may move the housing **210** with respect to the base **310** in an optical axis direction. At this time, the bobbin **110** may move integrally with the housing **210.** The lens module **20** being coupled to the bobbin **110** may also move integrally with the housing **210.** Through this, the lens module **20** may be moved in an optical axis direction with respect to the image sensor **60.**

The shape memory alloy member **400** may comprise a shape memory alloy (SMA). The shape memory alloy may change shape when an electric current is applied. The shape memory alloy may be changed in length when a current is applied. The shape memory alloy may be reduced in length when a current is applied. The shape memory alloy can be extended in length when a current is applied.

The shape memory alloy member **400** may comprise a first unit shape memory alloy member and a second unit shape memory alloy member. The magnet **120** may comprise a first unit magnet and a second unit magnet. The moving portion may comprise a first corner region being connected to the first unit shape memory alloy member, and a second corner region adjacent to the first corner region. The first unit magnet may be disposed adjacent to the second corner region rather than the first corner region. The driving unit may comprise a first unit driving unit adjacent to the second corner region rather than the first corner region. The moving portion may comprise a first corner region and a third corner region in a diagonal direction. The second unit shape memory alloy member may be connected to the third corner region of the moving portion. The second unit magnet may be disposed adjacent to the second corner region rather than the third corner region.

In a first embodiment of the present invention, the driving unit may comprise first to fourth unit driving units. At this time, the first unit driving unit and the second unit driving unit may be disposed adjacent to the second corner region, and the third unit driving unit and the fourth unit driving unit may be disposed adjacent to the fourth corner region. The first unit driving unit may be disposed closer to the second corner region than to the first corner region. The second unit driving unit may be disposed closer to the second corner region than to the third corner region. The third unit driving unit may be disposed closer to the fourth corner region than to the third corner region. The fourth unit driving unit may be disposed closer to the fourth corner region than to the first corner region.

In a first embodiment of the present invention, the coil **330** and the magnet **120** may be disposed to be biased toward one corner region among both corner regions. That is, the coil **330** and the magnet **120** may be eccentrically disposed. Through this, a space for a predetermined length of the shape memory alloy wire **410** may be secured. In addition, a space for the press-fit structure of the coupling terminal of the shape memory alloy wire **410** may be secured.

In a first embodiment of the present invention, the shape memory alloy wire **410** may have the same length in both sides of the portion being caught by the bobbin **110.** In addition, the portion of the bobbin **110** to which the shape memory alloy wire **410** is being caught may be disposed higher than the center of the height of the bobbin **110.** At this time, the center of the height of the bobbin **110** may be a point that bisects the upper end of the bobbin **110** and the lower end of the bobbin **110.**

The lens driving device **10** may comprise a shape memory alloy wire **410.** The shape memory alloy member **400** may comprise a shape memory alloy wire **410.** One end and the other end of the shape memory alloy wire **410** may be fixed to the base **310.** A portion of the shape memory alloy wire **410** between one end and the other end may be caught by the housing **210.** A portion of the shape memory alloy wire **410** may be coupled to the housing **210.** The shape memory alloy wire **410** may support the housing **210.** The shape memory alloy wire **410** may be disposed so as not to interfere with the coil **3300.** One end and the other end of the shape memory alloy wire **410** may be fixed to the substrate **320.** The shape memory alloy wire **410** may pull the housing **210** upward. The shape memory alloy wire **410** may move the housing **210** upward in an optical axis direction. The shape memory alloy wire **410** may be reduced in length when a current is applied. The shape memory alloy wire **410** may be disposed in a state in which the center is sagging by a first length (refer to H in FIG. 14) in an initial state in which no current is applied as illustrated in FIG. 14. Thereafter, when a current is applied to the shape memory alloy wire **410,** the central portion may move upward so that the amount of sagging is reduced by a second length which is smaller than the first length.

The shape memory alloy wire **410** may comprise a plurality of shape memory alloy wires. The shape memory alloy wire **410** may comprise two shape memory alloy wires. The two shape memory alloy wires may be disposed symmetrically with respect to the optical axis.

The shape memory alloy member **400** may comprise a first fixed portion **411.** The shape memory alloy wire **410** may comprise a first fixed portion **411.** The first fixed portion **411** may be fixed to the substrate **320.** The first fixed portion **411** may be electrically connected to the substrate **320.** The first fixed portion **411** may be a conductive member. The first fixed portion **411** may be electrically connected to the shape memory alloy wire **410.** The first fixed portion **411** may be fixed to the base **310.**

The shape memory alloy member **400** may comprise a second fixed portion **412.** The shape memory alloy wire **410** may comprise a second fixed portion **412.** The second fixed portion **412** may be fixed to the substrate **320.** The second fixed portion **412** may be electrically connected to the substrate **320.** The second fixed portion **412** may be a conductive member. The second fixed portion **412** may be electrically connected to the shape memory alloy wire **410.** The second fixed portion **412** may be fixed to the base **310.**

The shape memory alloy member **400** may comprise a locking portion **413.** The shape memory alloy wire **410** may comprise a locking portion **413.** The locking portion **413** is a portion of the shape memory alloy wire **410** and may be a portion being caught by the housing **210.** The locking portion **413** may be formed in a central portion of the shape memory alloy wire **410.** The locking portion **413** may be in direct contact with the housing **210.** The locking portion **413** may be fixed to the housing **210.** The locking portion **413** may be disposed at a corner region of the housing **210.**

The lens driving device **10** may comprise a support member **500.** The support member **500** may connect the bobbin **110** and the housing **210.** The support member **500** may elastically support the bobbin **110** with respect to the housing **210** when the bobbin **110** moves in a direction perpendicular to the optical axis direction. The support member **500** may have elasticity. The support member **500** may comprise a portion having elasticity. The support member **500** may be elastically restored. The support member **500** may comprise a non-metallic material. The support member **500** may be a non-metal. The support member **500** may be formed of an injection molding product. The support member **500** may comprise an elastomer. The support member **500** may be disposed long in length in an optical axis direction. One end of the support member **500** is fixed to the bobbin **110** and the other end of the support member **500** may be fixed to the housing **210.** One end of the support member **500** may be coupled to the bobbin **110,** and the other end may be coupled to the moving portion.

The support member **500** may have regions having different widths. The width of the first portion of the support member **500** may be different from the width of the other portion. The support member **500** may have regions having different thicknesses. At this time, the width or thickness may be a length in a direction perpendicular to the optical axis direction. The width of the peripheral region of the support member **500** may be thicker than the central region. The support member **500** has a head portion and a body portion, and the width of the head portion may be greater than the width of the body portion.

The support member **500** may have greater strength than a metal wire. The support member **500** may have a greater tensile strength than the metal wire.

In a modified embodiment, the width of the support member **500** may be kept constant in a lengthwise direction. The support member **500** may have a constant thickness in a lengthwise direction.

In a modified embodiment, the upper surface of the support member **500** is coupled with the bobbin **110** and the lower surface thereof may be coupled with the housing **210.** At this time, the concave portion of the support member **500** may be spaced apart from the bobbin **110** and the housing **210.** The bobbin **110** comprises a wing portion being protruded from an outer circumferential surface of the bobbin **110,** and the upper surface of the support member **500** may be coupled to the wing portion of the bobbin **110.** The housing **210** may comprise a wing portion being protruded from an inner circumferential surface of the housing **210,** and a lower surface of the support member **500** may be coupled to the wing portion of the housing **210.**

The support member **500** may comprise a body portion **510.** The body portion **510** may be disposed between the first and second concave portions **520** and **530.** The body portion **510** may comprise a portion that becomes wider as it goes away from the first and second concave portions **520** and **530.** The body portion **510** may comprise a first portion, a second portion, and a third portion connecting the first portion and the second portion and being formed to have a width wider than the width of the first portion and the second portion. The body portion **510** may be formed to have the largest width at the central portion. The outer surface of the body portion **510** may comprise a curved surface. The outer surface of the body portion **510** may be formed only with a curved surface. The body portion **510** may be formed to have a curvature.

The support member **500** may comprise a first concave portion **520.** The first concave portion **520** may be formed to have a narrower width than the body portion **510.** The width of the first concave portion **520** may be a width of the support member **500** in a direction perpendicular to the lengthwise. The first concave portion **520** of the support member **500** may be coupled to the bobbin **110.** The first concave portion **520** may be disposed at a higher position than the second concave portion **530.** The first concave portion **520** may be coupled to the groove **111** of the bobbin **110.** The first concave portion **520** may be inserted into the groove **111** of the bobbin **110.** The first concave portion **520** may be fixed to the groove 111 of the bobbin **110.**

The support member **500** may comprise a second concave portion **530.** The second concave portion **530** may be formed to have a narrower width than the body portion **510.** The width of the second concave portion **530** may be a width of the support member **500** in a direction perpendicular to the lengthwise direction. The second concave portion **530** of the support member **500** may be coupled to the housing **210.** The second concave portion **530** may be coupled to the groove **211** of the housing **210.** The second concave portion **530** may be inserted into the groove **211** of the housing **210.** The second concave portion **530** may be fixed to the groove **211** of the housing **210.**

The width of the concave portions **520** and **530** of the support member **500** may be 10% to 70% of the width of the fixed portions **540** and **550.** The width of the concave portions **520** and **530** of the support member **500** may be 20% to 40% of the width of the fixed portions **540** and **550.** The concave portions **520** and **530** of the support member **500** may be extended from the fixed portions **540** and **550.** In a modified embodiment, the concave portions **520** and **530** of the support member **500** may be spaced apart from the bobbin **110** and the housing **210.**

The support member **500** may comprise a first fixed portion **540.** The first fixed portion **540** may be extended from the first concave portion **520** to the opposite side of the body portion **510.** The first fixed portion **540** may be formed to have a wider width than the first concave portion **520.** The first fixed portion **540** may be caught at the upper surface of the bobbin **110.** The first fixed portion **540** may be fixed to the bobbin **110.**

The support member **500** may comprise a second fixed portion **550.** The second fixed portion **550** may be extended from the second concave portion **530** to the opposite side of the body portion **510.** The second fixed portion **550** may be formed to have a wider width than the second concave portion **530.** The second fixed portion **550** may be caught at the lower surface of the housing **210.** The second fixed portion **550** may be fixed to the housing **210.**

In a modified embodiment, the lens driving device **10** may comprise a support member **1500** according to a second embodiment of the present invention. The support member **1500** may connect the housing **210** and the bobbin **110.** The support member **1500** may support the bobbin **110** with respect to the housing **210** when the bobbin **110** moves in an optical axis direction. The support member **1500** may have elasticity. The support member **1500** may comprise a portion having elasticity. The support member **1500** may be elastically restored. The support member **1500** may be formed of an elastomer. One end of the support member **1500** may be fixed to the bobbin **110** and the other end of the support member **1500** may be fixed to the housing **210.** A portion of the support member **1500** may be attached to the bobbin **110.** The adhesive may be disposed in the groove of the bobbin **110.** The other part of the support member **1500** may be attached to the housing **210.** The adhesive may be disposed in the groove of the housing **210.**

Furthermore, in a modified embodiment, the lens driving device **10** may comprise some configurations of a second embodiment of the present invention replacing some configurations of the first embodiment of the present invention.

The lens driving device **10** may comprise an elastic member **600.** The elastic member **600** may have elasticity. The elastic member **600** may comprise a portion having elasticity. The elastic member **600** may be elastically restored. The elastic member **600** may be disposed in the housing **210.** The elastic member **600** may be disposed between the housing **210** and the upper plate **341** of the cover member **340.** The elastic member **600** may press the housing **210** downward in an optical axis direction through elasticity. Through this, the housing **210** may be maintained while being firmly attached to the shape memory alloy wire **410.** The elastic member **600** may be a coil spring. At least a portion of the elastic member **600** may be inserted into the groove **217** formed at an upper surface of the housing **210.**

The lens driving device **10** may comprise a first Hall sensor **701.** The first Hall sensor **701** may detect the first magnet **121.** The first Hall sensor **701** may detect a magnetic force of the first magnet **121.** The first Hall sensor **701** may comprise a Hall element. The first Hall sensor **701** may be disposed in the substrate **320.** The first Hall sensor **701** may be electrically connected to the substrate **320.** The first Hall sensor **701** may be disposed inside the first coil **331.** The first Hall sensor **701** may detect the movement of the first magnet **121.** The first Hall sensor **701** may detect movement of the bobbin **110** in a first direction perpendicular to the optical axis direction. Or, the first Hall sensor **701** may detect a movement of the bobbin **110** in a second direction perpendicular to the optical axis direction. The position and/or movement of the bobbin **110** detected through the first Hall sensor **701** may be used for feedback control in OIS driving of the bobbin **110.**

The lens driving device **10** may comprise a second Hall sensor **702.** The second Hall sensor **702** may detect the second magnet **122.** The second Hall sensor **702** may comprise a Hall element. The second Hall sensor **702** may be disposed in the substrate **320.** The second Hall sensor **702** may be electrically connected to the substrate **320.** The second Hall sensor **702** may be disposed inside the second coil **332.** The second Hall sensor **702** may detect the movement of the second magnet **122.** The second Hall sensor **702** may detect movement of the bobbin **110** in a second direction perpendicular to the optical axis direction. Or, the second Hall sensor **702** may detect a movement of the bobbin **110** in a first direction perpendicular to the optical axis direction. The second Hall sensor **702** may detect the movement component in a direction different from that of the first Hall sensor **701** during movement of the bobbin **110.** The position and/or movement of the bobbin **110** detected through the second Hall sensor **702** may be used for feedback control in OIS driving of the bobbin **110.**

The lens driving device **10** may comprise a driver IC **703.** The driver IC **703** may control a current being applied to the shape memory alloy member **400.** The driver IC **703** may be electrically connected to the shape memory alloy member **400.** The driver IC **703** may be disposed in the substrate **320.** The driver IC **703** may be electrically connected to the substrate **320.** The base **310** may comprise a groove or hole having a shape corresponding to that of the driver IC **703.** The driver IC **703** may be disposed in a groove or hole of the base **310.** In a modified embodiment, the driver IC **703** may be disposed in the printed circuit board **50.** The driver IC **703** may be electrically connected to the coil **120** to control a current applied to the coil **120.**

A first embodiment of the present invention uses SMA during AF driving, and a support member formed of a hinge can be used during OIS driving. Through this, a reliability advantage can be obtained, and it can be applied to actuators that drive large aperture, heavy-duty lenses.

In a first embodiment of the present invention, it may be driven by connecting the housing **210** and the base **310** with a shape memory alloy wire **410.** At this time, in order to secure the length of the shape memory alloy wire **410,** that is, to secure a larger stroke, the shape memory alloy wire **410** may be connected to the housing **210** in a 90 degree direction. In a first embodiment of the present invention, the magnet **120** may be disposed so that the AF and OIS space can be secured.

Hereinafter, a camera module according to a first embodiment of the present invention will be described with reference to the drawings.

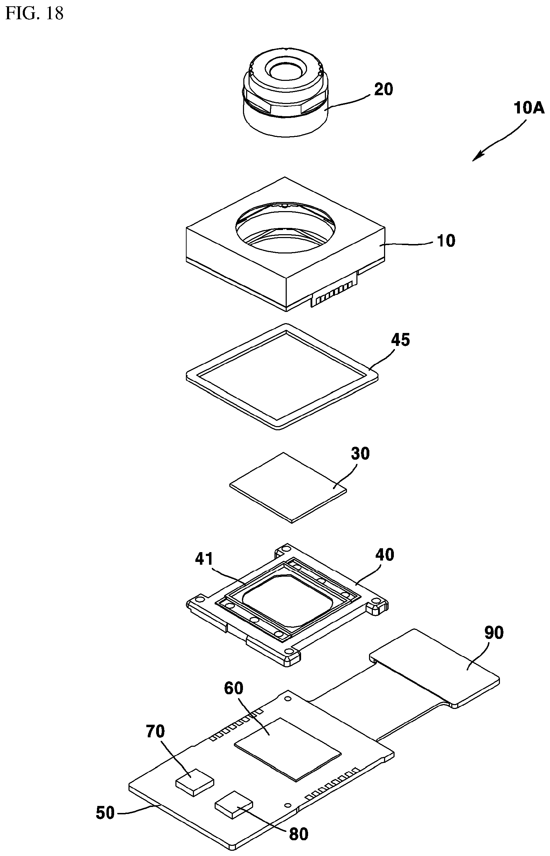

FIG. 18 is an exploded perspective view of the camera device according to a first embodiment of the present invention.

The camera module **10A** may comprise a camera device.

The camera module **10A** may comprise a lens module **20.** The lens module **20** may comprise at least one lens. The lens may be disposed at a position corresponding to the image sensor **60.** The lens module **20** may comprise a lens and a barrel. The lens module **20** may be coupled to the bobbin **110** of the lens driving device **10.** The lens module **20** may be coupled to the bobbin **110** by screw-coupling and/or adhesive. The lens module **20** may move integrally with the bobbin **110.**

The camera module **10A** may comprise a filter **30.** The filter **30** may serve to block light of a specific frequency band among the light passing through the lens module from being incident on the image sensor **60.** The filter **30** may be disposed parallel to the x-y plane. The filter **30** may be disposed between the lens module **20** and the image sensor **60.** A filter **30** may be disposed on the sensor base **40.** In a modified embodiment, the filter **30** may be placed in the base **310.** The filter **30** may comprise an infrared filter. The infrared filter may block light in the infrared region from being incident on the image sensor **60.**

The camera module **10A** may comprise a sensor base **40.** The sensor base **40** may be disposed between the lens driving device **10** and the printed circuit board **50.** The sensor base **40** may comprise a protrusion **41** in which the filter **30** is disposed. An opening may be formed in a portion of the sensor base **40** where the filter **30** is disposed so that light passing through the filter **30** may be incident on the image sensor **60.** The adhesive member **45** may couple or attach the base **310** of the lens driving device **10** to the sensor base **40.** The adhesive member **45** may additionally serve to prevent foreign substances from entering the inside of the lens driving device **10.** The adhesive member **45** may comprise any one or more among an epoxy, a thermosetting adhesive, and an ultraviolet curable adhesive.

The camera module **10A** may comprise a printed circuit board (PCB) **50.** The printed circuit board **50** may be a substrate or a circuit board. A lens driving device **10** may be disposed in the printed circuit board **50.** A sensor base **40** may be disposed between the printed circuit board **50** and the lens driving device **10.** The printed circuit board **50** may be electrically connected to the lens driving device **10.** The image sensor **60** may be disposed in the printed circuit board **50.** The printed circuit board **50** may comprise various circuits, elements, control units, and the like to convert an image being formed in the image sensor **60** into an electric signal and transmit it to an external device.

The camera module **10A** may comprise an image sensor **60.** The image sensor **60** may have a configuration in which light passing through the lens and filter **30** is incident to form an image. The image sensor **60** may be mounted on the printed circuit board **50.** The image sensor **60** may be electrically connected to the printed circuit board **50.** For example, the image sensor **60** may be coupled to the printed circuit board **50** by a surface mounting technology (SMT). As another example, the image sensor **60** may be coupled to the printed circuit board **50** by a flip chip technology. The image sensor **60** may be disposed so that the lens and the optical axis coincide. That is, the optical axis of the image sensor **60** and the optical axis of the lens may be aligned. The image sensor **60** may convert light irradiated to the effective image region of the image sensor **60** into an electrical signal. The image sensor **60** may be any one among a charge coupled device (CCD), a metal oxide semi-conductor (MOS), a CPD, and a CID.

The camera module **10A** may comprise a motion sensor **70.** The motion sensor **70** may be mounted in the printed circuit board **50.** The motion sensor **70** may be electrically connected to the control unit **80** through a circuit pattern provided to the printed circuit board **50.** The motion sensor **70** may output rotational angular velocity information due to the movement of the camera module **10A.** The motion sensor **70** may comprise a 2-axis or 3-axis gyro sensor, or an angular velocity sensor.

The camera module **10A** may comprise a control unit **80.** The control unit **80** may be disposed in the printed circuit board **50.** The control unit **80** may be electrically connected to the coil **330** of the lens driving device **10.** The control unit **80** may individually control the direction, intensity, and amplitude of the current supplied to the coil **330.** The control unit **80** may control the lens driving device **10** to perform an autofocus function and/or an image stabilization function. Furthermore, the control unit **80** may perform autofocus feedback control and/or handshake correction feedback control for the lens driving device **10.**

The camera module **10A** may comprise a connector **90.** The connector **90** may be electrically connected to the printed circuit board **50.** The connector **90** may comprise a port for electrically connecting to an external device.

Hereinafter, an optical device according to a first embodiment of the present invention will be described with reference to the drawings.

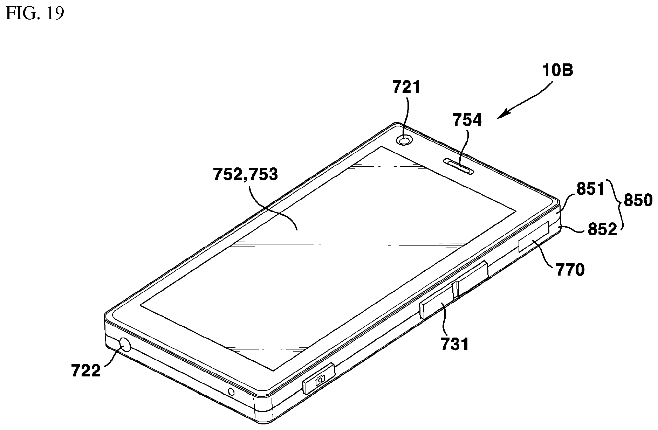

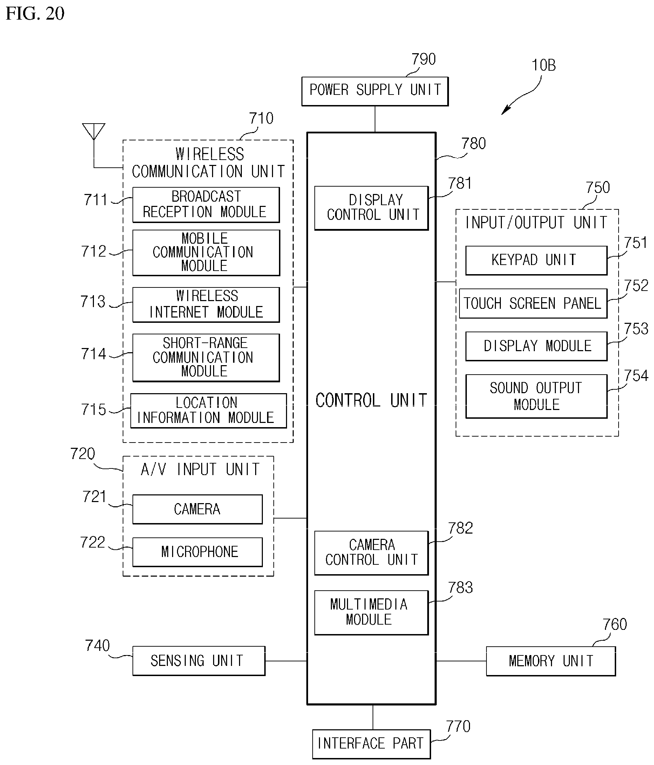

FIG. 19 is a perspective view illustrating an optical device according to a first embodiment of the present invention; and FIG. 20 is a block diagram of an optical device according to a first embodiment of the present invention.

The optical device **10B** may comprise a portable terminal. The optical device **10B** may be any one among a hand phone, a portable phone, a smart phone, a portable smart device, a digital camera, a laptop computer, a digital broadcasting terminal, a personal digital assistant (PDA), a portable multimedia player (PMP), and navigation. However, the type of the optical device **10B** is not limited thereto, and any device for photographing a video or a picture may be comprised in the optical device **10B.**

The optical device **10B** may comprise a main body **850.** The main body **850** may have a bar shape. Or, the main body **850** may have various structures, such as a slide type, a folder type, a swing type, a swivel type, and the like in which two or more sub-bodies are coupled to be relatively movable. The main body **850** may comprise a case (casing, housing, and cover) forming an outer appearance. For example, the main body **850** may comprise a front case **851** and a rear case **852.** Various electronic components of the optical device **10B** may be embedded in a space formed between the front case **851** and the rear case **852.** A display module **753** may be disposed on one surface of the main body **850.** A camera **721** may be disposed on one or more surfaces of one surface and the other surface being disposed at an opposite side of the one surface of the main body **850.**

The optical device **10B** may comprise a wireless communication unit **710.** The wireless communication unit **710** may comprise one or more modules enabling wireless communication between the optical device **10B** and the wireless communication system, or between the optical device **10B** and the network in which the optical device **10B** is located. For example, the wireless communication unit **710** may comprise any one or more among a broadcast reception module **711,** a mobile communication module **712,** a wireless Internet module **713,** a short-range communication module **714,** and a location information module **715.**

The optical device **10B** may comprise an A/V input unit **720.** The A/V input unit **720** is for inputting an audio signal or a video signal and may comprise any one or more of a camera **721** and a microphone **722.** At this time, the camera **721** may comprise a camera module **10A** according to the present embodiment.

The optical device **10B** may comprise a sensing unit **740.** The sensing unit **740** may generate a sensing signal for controlling the operation of the optical device **10B** by detecting the current state of the optical device **10B** such as the opening/closing state of the optical device **10B,** the position of the optical device **10B,** the presence or absence of user contact, the orientation of the optical device **10B,** acceleration/deceleration of the optical device **10B,** and the like. For example, when the optical device **10B** is in the form of a slide phone, it is possible to sense whether the slide phone is opened or closed. In addition, it is responsible for sensing functions related to whether the power supply unit **790** is supplied with power, whether the interface unit **770** is coupled to an external device, and the like.

The optical device **10B** may comprise an input/output unit **750.** The input/output unit **750** may be configured to generate an input or output related to visual, auditory, or tactile sense. The input/output unit **750** may generate input data for controlling the operation of the optical device **10B,** and may output information processed by the optical device **10B.**

The input/output unit **750** may comprise any one or more among a keypad unit **751,** a touch screen panel **752,** a display module **753,** and a sound output module **754.** The keypad unit **751** may generate input data in response to a keypad input. The touch screen panel **752** may convert a change in capacitance generated due to a user's touch on a specific region of the touch screen into an electrical input signal. The display module **753** may output an image photographed by the camera **721.** The display module **753** may comprise a plurality of pixels whose color changes according to an electrical signal. For example, the display module **753** may comprise at least one among a liquid crystal display, a thin film transistor liquid crystal display, an organic light emitting diode, a flexible display, and a 3D display. The sound output module **754** may output audio data received from the wireless communication unit **710** in a call signal reception, a call mode, a recording mode, a voice recognition mode, or a broadcast reception mode, or stored in the memory unit **760.**

The optical device **10B** may comprise a memory unit **760.** A program for processing and controlling the control unit **780** may be stored in the memory unit **760.** In addition, the memory unit **760** may store input/output data, for example, any one or more of a phone book, a message, an audio, a still image, a photo, and a moving picture. The memory unit **760** may store an image photographed by the camera **721,** for example, a photo or a video.

The optical device **10B** may comprise an interface unit **770.** The interface unit **770** serves as a path for connecting to an external device being connected to the optical device **10B.** The interface unit **770** may receive data from an external device, receive power and transmit it to each component inside the optical device **10B,** or transmit data inside the optical device **10B** to the external device. The interface unit **770** may comprise any one or more among a wired/wireless headset port, an external charger port, a wired/wireless data port, a memory card port, a port for connecting a device equipped with an identification module, and an audio I/O port, a video I/O port, and an earphone port.

The optical device **10B** may comprise a control unit **780.** The control unit **780** may control the overall operation of the optical device **10B.** The control unit **780** may perform related control and processing for voice call, data communication, video call, and the like. The control unit **780** may comprise a display control unit **781** that controls a display module **753** that is a display of the optical device **10B.** The control unit **780** may comprise a camera control unit **782** that controls the camera module. The control unit **780** may comprise a multimedia module **783** for playing multimedia. The multimedia module **783** may be provided inside the control unit **180** or may be provided separately from the control unit **780.** The control unit **780** may perform a pattern recognition process capable of recognizing a handwriting input or a drawing input performed on the touch screen as characters and images, respectively.

The optical device **10B** may comprise a power supply unit **790.** The power supply unit **790** may receive external power or internal power by the control of the control unit **780** to supply power required for operation of each component.

Hereinafter, a configuration of a lens driving device according to a second embodiment of the present invention will be described with reference to the drawings.

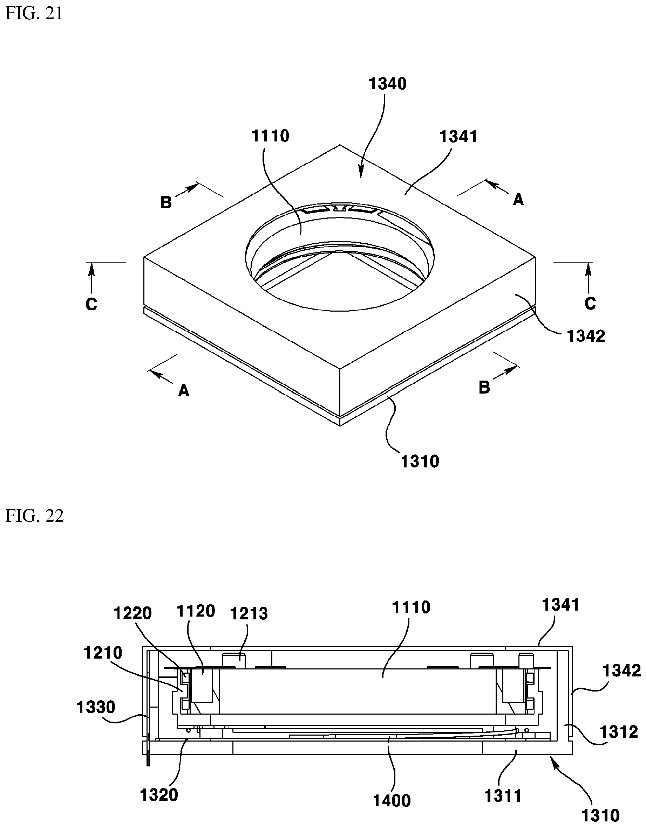

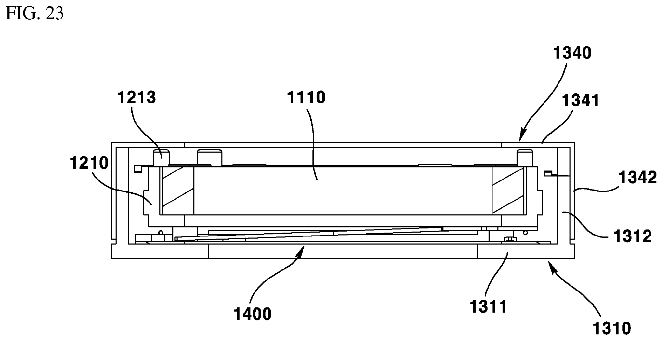

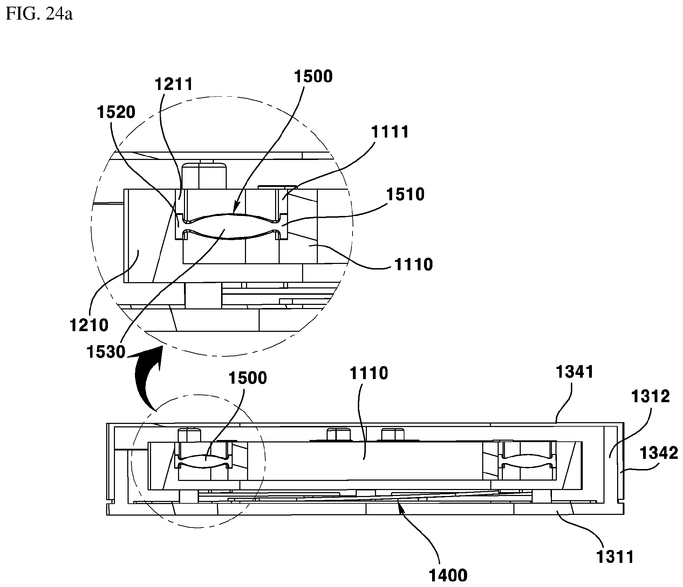

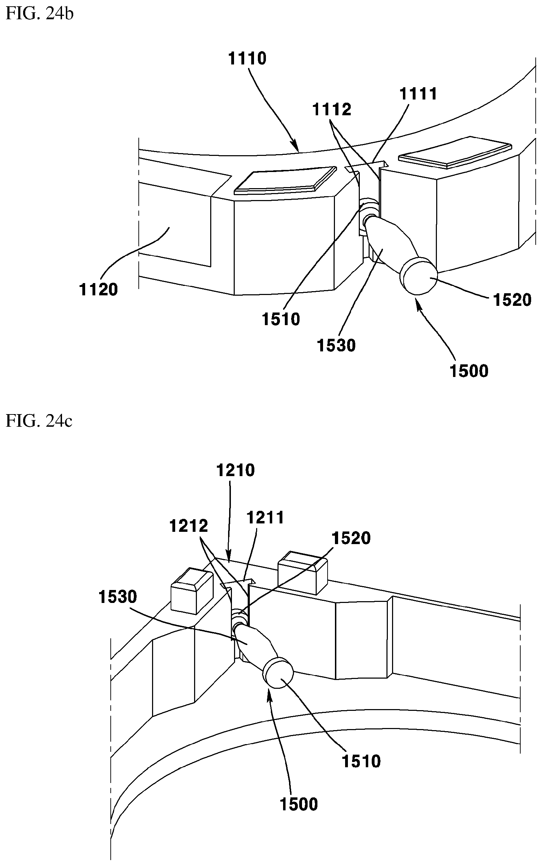

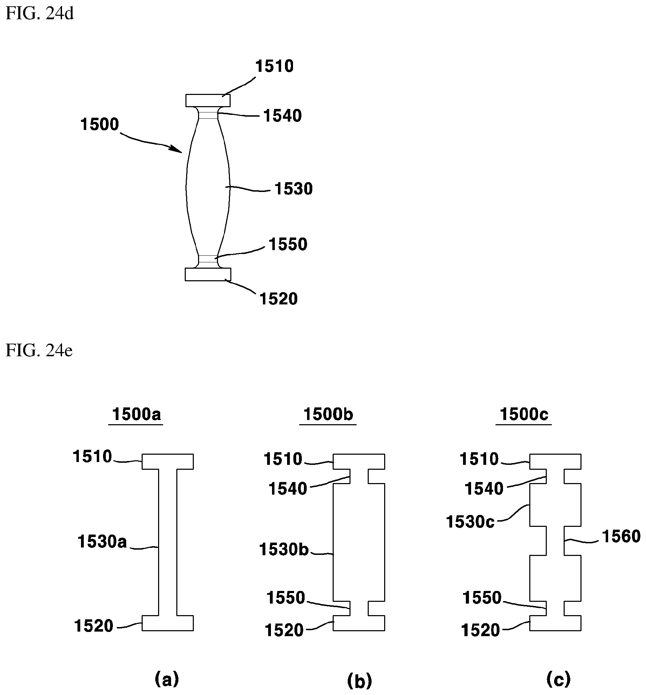

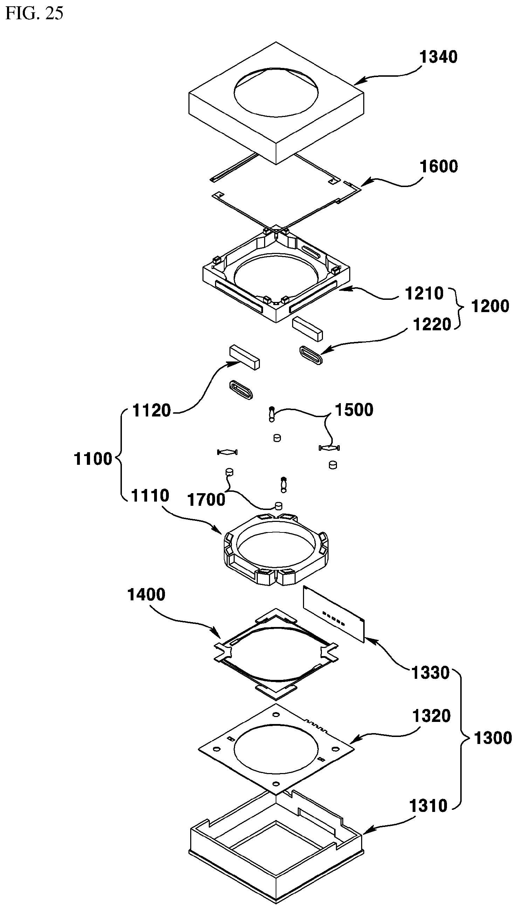

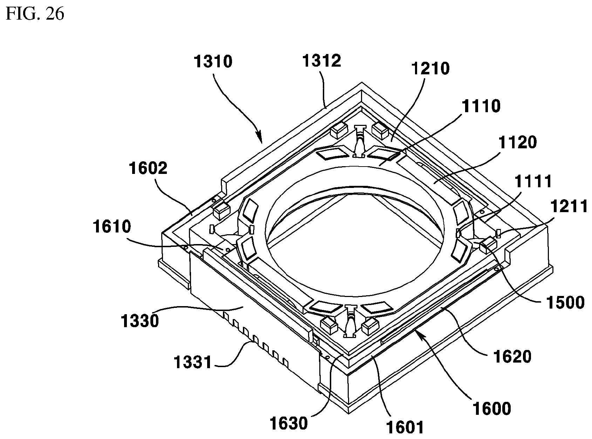

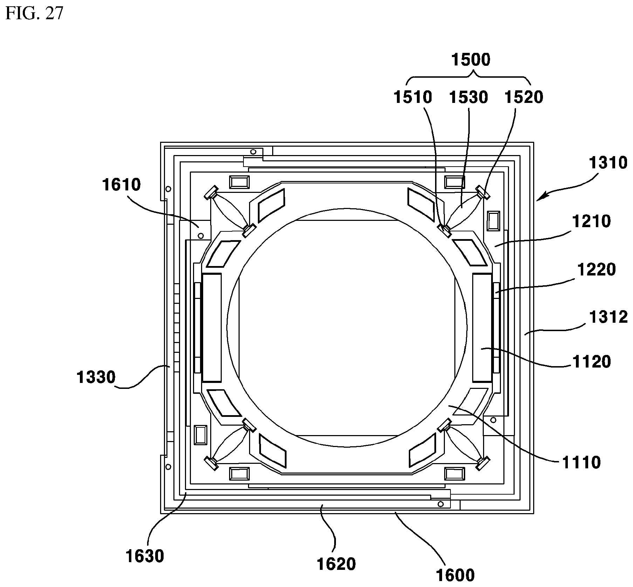

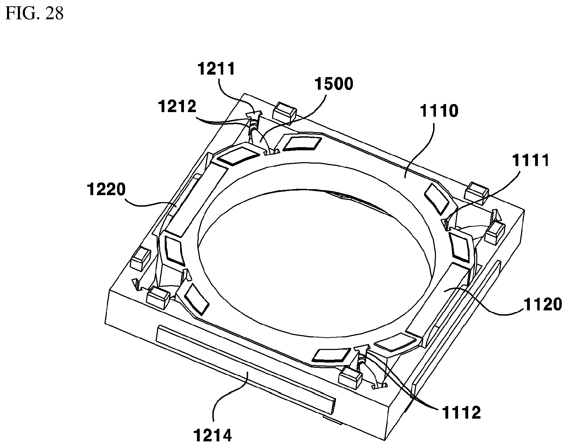

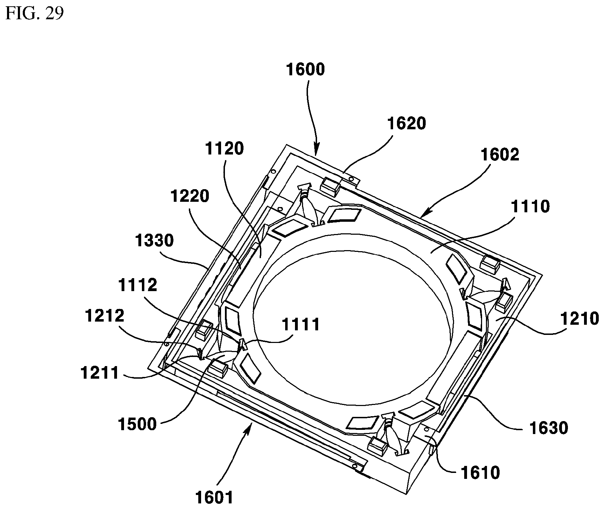

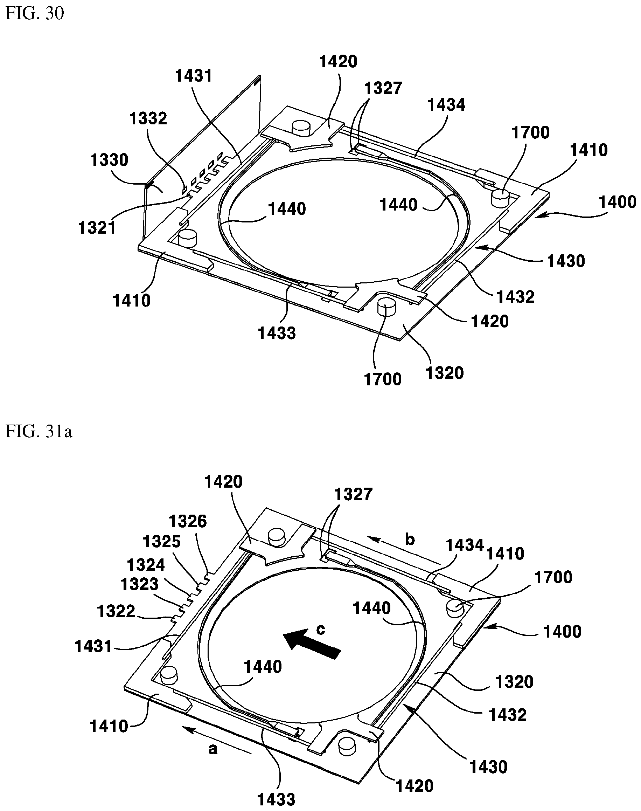

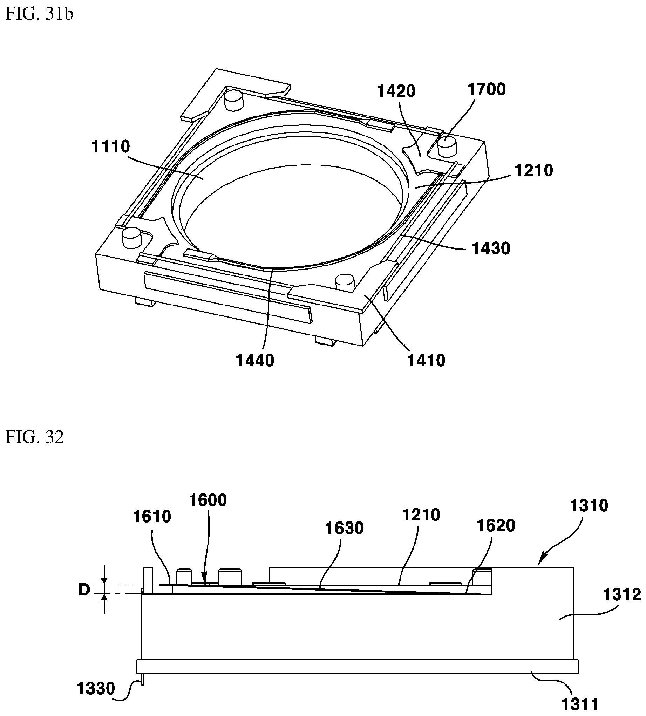

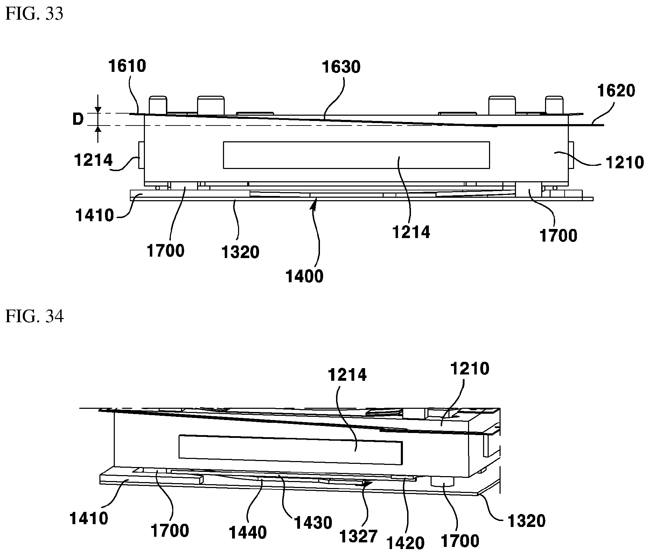

FIG. 21 is a perspective view of a lens driving device according to a second embodiment of the present invention; FIG. 22 is a cross-sectional view taken along line A-A of FIG. 21; FIG. 23 is a cross-sectional view taken along line B-B of FIG. 21; FIG. 24a is a cross-sectional view taken along line C-C of FIG. 21 and a partially enlarged view; FIG. 24b is an enlarged view illustrating the coupling structure of a support member and a bobbin according to a second embodiment of the present invention; FIG. 24c is an enlarged view illustrating the coupling structure of a support member and a housing according to a second embodiment of the present invention; FIG. 24d is a plan view of a support member according to a second embodiment of the present invention; FIG. 24e is a plan view of a support member according to a modified embodiment; FIG. 25 is an exploded perspective view of a lens driving device according to a second embodiment of the present invention; FIG. 26 is a perspective view illustrating a state in which a cover member of a lens driving device according to a second embodiment of the present invention is removed; FIG. 27 is a plan view illustrating a state in which a cover member of a lens driving device according to a second embodiment of the present invention is removed; FIG. 28 is a perspective view illustrating a first mover and a second mover of a lens driving device according to a second embodiment of the present invention; FIG. 29 is a perspective view illustrating a coupling state of a first mover, a second mover, an elastic member, and a second substrate of a lens driving device according to a second embodiment of the present invention; FIG. 30 is a perspective view illustrating a first substrate, a second substrate, and a shape memory alloy member of the lens driving device according to a second embodiment of the present invention; FIG. 31a is a view for explaining the driving of a shape memory alloy member of a lens driving device according to a second embodiment of the present invention; FIG. 31b is a view illustrating a coupling structure of a shape memory alloy member and a housing according to a second embodiment of the present invention; FIG. 32 is a side view illustrating a state in which a cover member of a lens driving device according to the second embodiment of the present invention is removed; FIG. 33 is a view for explaining a housing, a bearing, and related structures of a lens driving device according to a second embodiment of the present invention; and FIG. 34 is a view for explaining the coupling structure of a shape memory alloy member of a lens driving device according to a second embodiment of the present invention.

The lens driving device **1010** may be a voice coil motor (VCM). The lens driving device **1010** may be a lens driving motor. The lens driving device **1010** may be a lens driving actuator. The lens driving device **1010** may comprise an AF module. The lens driving device **1010** may comprise an OIS module.

The lens driving device **1010** may comprise a first mover **1100.** The first mover **1100** may be coupled with a lens. The first mover **1100** may be connected to the second mover **1200** through the support member **1500.** The first mover **1100** may move through interaction with the second mover **1200.** At this time, the first mover **1100** may move integrally with the lens. Meanwhile, the first mover **1100** may move during AF driving. At this time, the first mover **1100** may be referred to as an 'AF mover'. However, the first mover **1100** may move together with the second mover **1200** even during OIS driving.

The lens driving device **1010** may comprise a bobbin **1110.** The first mover **1100** may comprise a bobbin **1110.** The bobbin **1110** may be disposed inside the housing **1210.** The bobbin **1110** may be disposed in a hole of the housing **1210.** The bobbin **1110** may be movably coupled to the housing **1210.** The bobbin **1110** may move in an optical axis direction inside the housing **1210.** The bobbin **1110** may move in the optical axis direction by the coil **1220** and the magnet **1120.** A lens may be coupled to the bobbin **1110.** The bobbin **1110** and the lens may be coupled by screw-coupling and/or adhesive. A magnet **1120** may be disposed in the bobbin **1110.** Or, in a modified embodiment, the coil **1220** may be disposed in the bobbin **1110.**

The bobbin **1110** may comprise a groove **1111.** The groove **1111** may be formed at an outer surface of the bobbin **1110.** The groove **1111** of the bobbin **1110** may be extended from an upper surface of the bobbin **1110.** The upper surface of the groove **1111** of the bobbin **1110** may be open. The groove **1111** of the bobbin **1110** may be opened toward the upper surface of the bobbin **1110.** The outer side of the groove **1111** of the bobbin **1110** may be open. The groove **1111** of the bobbin **1110** may be opened toward the outer side of the bobbin **1110.** The groove **1111** of the bobbin **1110** may comprise a bottom surface facing upward. The first fixed portion **1510** of the support member **1500** may be disposed at a bottom surface of the groove **1111** of the bobbin **1110.**

The bobbin **1110** may comprise a locking jaw **1112.** The locking jaw **1112** may be formed so that the first fixed portion **1510** of the support member **1500** is being caught. The locking jaw **1112** may provide a space being formed to have a width smaller than the width of the first fixed portion **1510** of the support member **1500.** The connection portion **1530** of the support member **1500** may pass through the space between the locking jaws **1112.** The locking jaw **1112** may comprise two jaws spaced apart from each other. A separation space may be provided between the two jaws. The width of the separation space may be smaller than the width of the first fixed portion **1510** of the support member **1500** in the corresponding direction. The separation space may be formed as a groove or a hole. The groove **1111** of the bobbin **1110** may comprise locking jaws **1112** being spaced apart from each other by a width smaller than the width of the first fixed portion **1510** so that the first fixed portion **1510** is being caught.

The lens driving device **1010** may comprise a magnet **1120.** The first mover **1100** may comprise a magnet **1120.** The magnet **1120** may be disposed in the bobbin **1110.** Or, in a modified embodiment, the magnet **1120** may be disposed in the housing **1210.** In this case, the coil **1220** may be disposed in the bobbin 1110. The magnet **1120** may be disposed at an outer side surface or an outer circumferential surface of the bobbin **1110.** The magnet **1120** may be fixed to the bobbin **1110** by an adhesive. The magnet **1120** may be disposed between the bobbin **1110** and the housing **1210.** The magnet **1120** may face the coil **1220.** The magnet **1120** may electromagnetically interact with the coil **1220.** The magnet **1120** may move the bobbin **1110** in an optical axis direction through interaction with the coil **1220.** The magnet **1120** may be used for AF driving. The magnet **1120** may be disposed at a side surface of the bobbin **1110.** The magnet **1120** may be a flat magnet having a flat plate shape.

The magnet **1120** may comprise a plurality of magnets. The magnet **1120** may comprise: a first magnet being disposed at a first side surface of the bobbin **1110;** and a second magnet being disposed on a second side surface opposite to the first side surface of the bobbin **1110.** The first magnet and the second magnet may be spaced apart from each other.

The lens driving device **1010** may comprise a second mover **1200.** The second mover **1200** may be movably coupled to the stator **1300** through the elastic member **1600** and a bearing **1700.** The second mover **1200** may support the first mover **1100** through the support member **1500.** The second mover **1200** may move the first mover **1100** or may move together with the first mover **1100.** The second mover **1200** may move through interaction with the stator **1300.** The second mover **1200** may move during OIS driving. At this time, the second mover **1200** may be referred to as an 'OIS mover'. The second mover **1200** may move integrally with the first mover **1100** during OIS driving.

The lens driving device **1010** may comprise a housing **1210.** The second mover **1200** may comprise a housing **1210.** The housing **1210** may be spaced apart from the base **1310.** The housing **1210** may be disposed outside the bobbin **1110.** The housing **1210** may accommodate at least a portion of the bobbin **1110.** The housing **1210** may be disposed inside the cover member **1340.** The housing **1210** may be disposed between the cover member **1340** and the bobbin **1110.** The housing **1210** may be formed of a material different from that of the cover member **1340.** The housing **1210** may be formed of an insulating material. The housing **1210** may be formed of an injection molding material. The outer side of the housing **1210** may be spaced apart from the inner surface of the side plate **1342** of the cover member **1340.** Through the space between the housing **1210** and the cover member **1340,** the housing **1210** may move for OIS operation. A coil **1220** may be disposed in the housing **1210.** The housing **1210** and the coil **1220** may be coupled by an adhesive.

The housing **1210** may comprise four side portions and four corner portions being disposed between the four side portions. The side portions of the housing **1210** may comprise: a first side portion; a second side portion being disposed at an opposite side of the first side portion; and third and fourth side portions being disposed at an opposite side from each other between the first side portion and the second side portion. A corner portion of the housing **1210** may comprise: a first corner portion being disposed between the first side portion and the third side portion; a second corner portion being disposed between the first side portion and the fourth side portion; a third corner portion being disposed between the second side portion and the third side portion; and a fourth corner portion being disposed between the second side portion and the fourth side portion. The side portion of the housing **1210** may comprise a 'sidewall'.

The housing **1210** may comprise a groove **1211.** The groove **1211** may be formed at an inner surface of the housing **1210.** The groove **1211** of the housing **1210** may be extended from an upper surface of the housing **1210.** The upper surface of the groove **1211** of the housing **1210** may be open. The groove **1211** of the housing **1210** may be opened toward the upper surface of the housing **1210.** The outer side of the groove **1211** of the housing **1210** may be open. The groove **1211** of the housing **1210** may be opened toward the outer side. The groove **1211** of the housing **1210** may comprise a bottom surface facing upward. A second fixed portion **1520** of the support member **1500** may be disposed at a bottom surface of the groove **1211** of the housing **1210.**

The housing **1210** may comprise a locking jaw **1212.** The locking jaw **1212** may be formed to catch the second fixed portion **1520** of the support member **1500.** The locking jaw **1212** may provide a space being formed with a width smaller than the width of the second fixed portion **1520** of the support member **1500.** The connection portion **1530** of the support member **1500** may pass through a separation space between the locking jaws **1212.** The locking jaw **1212** may comprise two jaws being spaced apart from each other. A separation space may be provided between the two jaws. The width of the separation space may be smaller than the width of the second fixed portion **1520** of the support member **1500** in the corresponding direction. The separation space may be formed as a groove or a hole. The groove **1211** of the housing **1210** may comprise locking jaws **1212** being spaced apart from each other by a width smaller than the width of the second fixed portion **1520** so that the second fixed portion **1520** is being caught.

The housing **1210** may comprise an upper stopper **1213.** The upper stopper **1213** may be protruded from an upper surface of the housing **1210.** The upper stopper **1213** may be formed at an upper surface of the housing **1210.** The upper stopper **1213** may be overlapped with the upper plate **1341** of the cover member **1340** in an optical axis direction. The upper stopper **1213** may form an uppermost end of the housing **1210.** Through this, when the housing **1210** moves upward, the upper stopper **1213** may be in contact with the upper plate **1341** of the cover member **1340.** That is, the upper stopper **1213** may limit the movement of the housing **1210** upward.

The housing **1210** may comprise a side stopper **1214.** The side stopper **1214** may be protruded from an outer surface of the housing **1210.** The side stopper **1214** may face the inner surface of the side plate **1342** of the cover member **1340.** The side stopper **1214** may be in contact with the side plate **1342** of the cover member **1340** when the housing **1210** moves laterally. That is, the side stopper **1214** may physically limit the stroke of the housing **1210** toward the side direction.

The lens driving device **1010** may comprise a coil **1220.** The second mover **1200** may comprise a coil **1220.** The coil **1220** may be an 'AF driving coil' used for AF driving. The coil **1220** may be disposed in the housing **1210.** Or, in a modified embodiment, the coil **1220** may be disposed in the bobbin **1110.** In this case, the magnet **1120** may be disposed in the housing **1210.** The coil **1220** may be disposed between the bobbin **1110** and the housing **1210.** The coil **1220** may be disposed at an inner side surface or an inner circumferential surface of the housing **1210.** The coil **1220** may be directly wound on the housing **1210.** Or, the coil **1220** may be coupled to the housing **1210** in a directly wound state. The coil **1220** may face the magnet **1120.** The coil **1220** may be disposed to face the magnet **1120.** The coil **1220** may electromagnetically interact with the magnet **1120.** In this case, when a current is supplied to the coil **1220** to form an electromagnetic field around the coil **1220,** the magnet **1120** may move with respect to the coil **1220** by the electromagnetic interaction between the coil **1220** and the magnet **1120.** The coil **1220** may be formed as a single coil.

The coil **1220** may comprise a plurality of coils. The coil **1220** may comprise a first coil facing the first magnet and a second coil facing the second magnet. The coil **1220** may comprise a connection coil connecting the first coil and the second coil. The coil **1220** may be electrically connected to the second substrate **1330** through the first and second elastic members **1601** and **1602.** The coil **1220** may receive power from the second substrate **1330** through the elastic member **1600.**

The lens driving device **1010** may comprise a stator **1300.** The stator **1300** may be disposed below the first and second movers **1200** and **1300.** The stator **1300** may movably support the second mover **1200.** The stator **1300** may move the second mover **1200.** At this time, the first mover **1100** may also move together with the second mover **1200.**

The lens driving device **1010** may comprise a base **1310.** The stator **1300** may comprise a base **1310.** The base **1310** may be disposed below the housing **1210.** The base **1310** may be disposed below the first substrate **1320.** A first substrate **1320** may be disposed at an upper surface of the base **1310.** The base **1310** may be coupled to the cover member **1340.** The base **1310** may be disposed on the printed circuit board **1050.**

The base **1310** may comprise a body portion **1311.** The body portion **1311** may be disposed between the housing **1210** and the printed circuit board **1050.** The body portion **1311** may be disposed in a direction perpendicular to the optical axis direction. The base **1310** may comprise a sidewall portion **1312.** The sidewall portion **1312** may be protruded from an upper surface of the body portion **1311.** The sidewall portion **1312** may be protruded upward from the body portion **1311.** The sidewall portion **1312** may accommodate the housing **1210** therein.

The lens driving device **1010** may comprise a first substrate **1320.** The stator **1300** may comprise a first substrate **1320.** The first substrate **1320** may be disposed in the base **1310.** The first substrate **1320** may be disposed between the base **1310** and the housing **1210.** The first substrate **1320** may be disposed at an upper surface of the base **1310.** The first substrate **1320** may be coupled to the second substrate **1330** being soldered with printed circuit board **1050** and being disposed below the base **1310.** Or, the first substrate **1230** and the second substrate **1330** may be integrally formed. In this case, the first substrate **1320** may comprise a flexible printed circuit board (FPCB). The first substrate **1320** may be partially bent.

The first substrate **1320** may comprise a terminal **1321.** The terminal **1321** may be formed at a side surface of the first substrate **1320.** The terminal **1321** of the first substrate **1320** may be coupled to the second substrate **1330.** The terminal **1321** of the first substrate **1320** may be coupled to the second terminal **1332** of the second substrate **1330.** The terminal **1321** of the first substrate **1320** may be electrically connected to the second terminal **1332** of the second substrate **1330** by a solder or a conductive epoxy.

The terminal **1321** of the first substrate **1320** may comprise: first to fourth terminals **1321, 1322, 1323,** and **1324** being connected to each of the first to fourth shape memory alloy wires **1431, 1432, 1433,** and **1434;** and a fifth terminal **1325** being commonly connected to the first to fourth shape memory alloy wires **1431, 1432, 1433,** and **1434.** At this time, a positive (+) current may be applied to the first to fourth terminals **1321, 1322, 1323,** and **1324,** and a negative (-) current may be applied to the fifth terminal **1325.** Conversely, a negative (-) current may be applied to the first to fourth terminals **1321, 1322, 1323,** and **1324,** and a positive (+) current may be applied to the fifth terminal **1325.**

The first substrate **1320** may comprise a terminal **1327.** The terminal **1327** may be disposed at an upper surface of the first substrate **1320.** The terminal **1327** may be coupled to the conductive wire **1440.** The terminal **1327** may be coupled to the conductive wire **1440** through a solder and/or a conductive epoxy. The terminal **1327** may comprise four terminals.

The lens driving device **1010** may comprise a second substrate **1330.** The stator **1300** may comprise a second substrate **1330.** The second substrate **1330** may be disposed at a side surface of the base **1310.** The second substrate **1330** may be electrically connected to the first substrate **1320.** The second substrate **1330** may be electrically connected to the shape memory alloy member **1400.** The second substrate **1330** may be electrically connected to the coil **1220.** The second substrate **1330** may be electrically connected to the printed circuit board **1050.**

The second substrate **1330** may comprise a first terminal **1331.** The first terminal **1331** may be disposed at an outer surface of the second substrate **1330.** The first terminal **1331** may be formed at a lower end of the second substrate **1330.** The first terminal **1331** of the second substrate **1330** may be coupled to the terminal of the printed circuit board **1050.** The first terminal **1331** may comprise a plurality of terminals. The first terminal **1331** may comprise seven terminals. Two terminals among the seven terminals may be electrically connected to the coil **1220.** Five of the seven terminals may be electrically connected to the shape memory alloy wire **1430.**

The second substrate **1330** may comprise a second terminal **1332.** The second terminal **1332** may be disposed at an inner surface of the second substrate **1330.** The second terminal **1332** may be formed below the second substrate **1330.** The second terminal **1332** may be disposed at a height corresponding to the first substrate **1320.** The second terminal **1332** of the second substrate **1330** may be coupled to the terminal **1321** of the first substrate **1320.** The second terminal **1332** may comprise a plurality of terminals. The second terminal **1332** may comprise five terminals. The five terminals may be respectively connected to the first to fifth terminals **1322, 1323, 1324, 1325,** and **1326** of the first substrate **1320.**

The lens driving device **1010** may comprise a cover member **1340.** The stator **1300** may comprise a cover member **1340.** The cover member **1340** may comprise a 'cover can'. The cover member **1340** may be disposed outside the housing **1210.** The cover member **1340** may be coupled the base **1310.** The cover member **1340** may be coupled to the base **1310.** The cover member **340** may accommodate the housing **1210** therein. The cover member **1340** may form the outer appearance of the lens driving device **1010.** The cover member **1340** may have a hexahedral shape with an open lower surface. The cover member **1340** may be a non-magnetic material. The cover member **1340** may be formed of a metal material. The cover member **1340** may be formed of a metal plate. The cover member **1340** may be connected to the ground portion of the printed circuit board **1050.** Through this, the cover member **1340** may be grounded. The cover member **1340** may block electromagnetic interference (EMI). At this time, the cover member **1340** may be referred to as an 'EMI shield can'.

The cover member **1340** may comprise an upper plate **1341** and a side plate **1342.** The cover member **1340** may comprise an upper plate **1341** comprising a hole, and a side plate **1342** being extended downward from an outer circumference or edge of the upper plate **1341.** The lower end of the side plate **1342** of the cover member **1340** may be disposed at a step portion of the base **1310.** The inner surface of the side plate **1342** of the cover member **1340** may be fixed to the base **1310** by an adhesive.

The upper plate **1341** of the cover member **1340** may comprise a hole. A hole may comprise an 'opening'. The hole may be formed in the upper plate **1341** of the cover member **1340.** When viewed from above, the lens can be seen through the hole. The hole may be formed in a size and shape corresponding to the lens. The size of the hole may be larger than the diameter of the lens module **1020** so that the lens module **1020** can be inserted and assembled through the hole. The light introduced through the hole may pass through the lens. At this time, the light passing through the lens may be converted into an electrical signal in the image sensor **1060** and acquired as an image.

The lens driving device **1010** may comprise a shape memory alloy member **1400.** The shape memory alloy member **1400** may connect the housing **1210** and the first substrate **1320.** The shape memory alloy member **1400** may connect the base **1310** and the housing **1210.** The shape memory alloy member **1400** may connect the stator **1300** and the second mover **1200.** Or, the shape memory alloy member **1400** may connect the stator **1300** and the first mover **1100.** The shape memory alloy member **1400** may connect the base **1310** and the bobbin **1110.**

The shape memory alloy member **1400** may be used for OIS driving. The shape memory alloy member **1400** may move the housing **1210** in a direction perpendicular to the optical axis direction with respect to the base **1310.** At this time, the bobbin **1110** may move integrally with the housing **1210.** The lens module **1020** coupled to the bobbin **1110** may also move integrally with the housing **1210.** Through this, the lens module **1020** may be moved in a direction perpendicular to the optical axis direction with respect to the image sensor **1060.**

The shape memory alloy member **1400** may comprise a shape memory alloy (SMA). The shape memory alloy may change shape when an electric current is applied. The shape memory alloy may be changed in length when a current is applied. The shape memory alloy may be reduced in length when a current is applied. The shape memory alloy can be extended in length when a current is applied.

The shape memory alloy member **1400** may comprise a first coupling part **1420.** The first coupling part **1420** is a part that moves together with the housing **1210** and may be a 'moving portion'. The first coupling part **1420** may be coupled to the housing **1210.** The first coupling part **1420** may be fixed to the housing **1210.** The first coupling part **1420** may comprise a metal. The first coupling part **1420** may comprise a portion formed of a conductive material. The first coupling part **1420** may comprise a plurality of first coupling parts. The first coupling part **1420** may comprise two first coupling parts. The two first coupling parts may be disposed opposite to each other with respect to an optical axis. Each of the two first coupling parts may comprise two conductive lines. Each of the two first coupling parts may comprise first and second conductive lines. Each of the first and second conductive lines may be electrically connected to a shape memory alloy wire **1430.**

The shape memory alloy member **1400** may comprise a second coupling part **1410.** The second coupling part **1410** is a part that maintains a fixed state together with the first substrate **1320** and may be a 'fixed portion'. The second coupling part **1410** as a fixed portion may move the first coupling part **1420** and the housing **1210** as a moving portion with respect to the first substrate **1320.** The second coupling part **1410** may be coupled to the first substrate **1320.** The second coupling part **1410** may be fixed to the first substrate **1320.** The second coupling part **1410** may be coupled to the base **1310.** The second coupling part **1410** may be fixed to the base **1310.** The second coupling part **1410** may comprise a metal. The second coupling part **1410** may comprise a portion formed of a conductive material. The second coupling part **1410** may comprise a plurality of second coupling parts. The second coupling part **1410** may comprise two second coupling parts. The two second coupling parts may be disposed opposite to each other with respect to an optical axis. The first coupling part **1420** may be disposed at two corners among the four corners of the base **1310** and the second coupling part **1410** may be disposed at the remaining two corners. Each of the two second coupling parts may comprise two conductive lines. Each of the two second coupling parts may comprise first and second conductive lines. Each of the first and second conductive lines may electrically connect the shape memory alloy wire **1430** and the first substrate **1320.**

The shape memory alloy member **1400** may comprise a shape memory alloy wire **1430.** The shape memory alloy wire **1430** may connect the first coupling part **1420** and the second coupling part **1410.** The shape memory alloy wire **1430** may change in length when a current is applied. The shape memory alloy wire **1430** may comprise a shape memory alloy (SMA). The shape memory alloy wire **1430** may be formed of a shape memory alloy (SMA). The shape memory alloy wire **1430** may change in shape when a current is applied. The shape memory alloy wire **1430** may change in length when a current is applied. The shape memory alloy wire **1430** may be reduced in length when a current is applied. The shape memory alloy wire **1430** may be extended in length when a current is applied.

The shape memory alloy wire **1430** may comprise a plurality of shape memory alloy wires. The shape memory alloy wire **1430** may comprise four shape memory alloy wires. The shape memory alloy wire **1430** may comprise first to fourth shape memory alloy wires **1431, 1432, 1433,** and **1434.** The first and second shape memory alloy wires **1431** and **1432** may be disposed in a first direction perpendicular to the optical axis direction. The third and fourth shape memory alloy wires **1433** and **1434** may be disposed in an optical axis direction and a second direction perpendicular to the first direction. Through this structure, the first and second shape memory alloy wires **1431** and **1432** may be used to move the first and second movers **1100** and 1200 in a first direction perpendicular to the optical axis direction. In addition, the third and fourth shape memory alloy wires **1433** and **1434** may be used to move the first and second movers **1100** and **1200** in an optical axis direction and a second direction perpendicular to the first direction.

As an example, as illustrated in FIG. 31, as a current is applied to the third shape memory alloy wire **1433,** the length of the third shape memory alloy wire **1433** is shortened (see a in FIG. 31), and when the length of the fourth shape memory alloy wire **1434** is increased (see b in FIG. 31), the first and second movers **1100** and **1200** may move in one of the second directions, which is the lengthwise direction of the third and fourth shape memory alloy wires **1433** and **1434** (see c in FIG. 31). Conversely, as a current is applied to the fourth shape memory alloy wire **1434,** the length of the fourth shape memory alloy wire **1434** is shortened, and when the length of the third shape memory alloy wire **1433** is increased, the first and second movers **1100** and **1200** may move to the other side of the second direction, which is the lengthwise direction of the third and fourth shape memory alloy wires **1433** and **1434.**

Similarly, as a current is applied to the first shape memory alloy wire 1431, the length of the first shape memory alloy wire **1431** is shortened, and when the length of the second shape memory alloy wire **1432** is increased, the first and second movers **1100** and **1200** may move in one of the first directions, which is the lengthwise direction of the first and second shape memory alloy wires **1431** and **1432.** Conversely, as a current is applied to the second shape memory alloy wire **1432,** the length of the second shape memory alloy wire **1432** is shortened, and when the length of the first shape memory alloy wire **1431** is increased, the first and second movers **1100** and **1200** may move to the other side of the first direction, which is the lengthwise direction of the first and second shape memory alloy wires **1431** and **1432.**

The shape memory alloy member **1400** may comprise a conductive wire **1440.** The conductive wire **1440** may connect the first coupling part **1420** and the first substrate **1320.** The conductive wire **1440** may electrically connect the first coupling part **1420** and the first substrate **1320.** The conductive wire **1440** may be coupled to the terminal **1327** of the first substrate **1320.** The conductive wire **1440** may comprise a plurality of conducting wires. The conductive wire **1440** may comprise two conductive wires. Each of the two conductive wires may comprise two conductive lines. The conductive line may be formed on the surface of the conductive wire. The two conductive lines may be spaced apart from each other. The conductive wire **1440** may have elasticity. The conductive wire **1440** may be formed of an elastic member.

The lens driving device **1010** may comprise a support member **1500.** The support member **1500** may connect the housing **1210** and the bobbin **1110.** The support member **1500** may support the bobbin **1110** with respect to the housing **1210** when the bobbin **1110** moves in an optical axis direction. The support member **1500** may have elasticity. The support member **1500** may comprise a portion having elasticity. The support member **1500** may be elastically restored. The support member **1500** may be formed of an elastomer. One end of the support member **1500** may be fixed to the bobbin **1110** and the other end of the support member **1500** may be fixed to the housing **1210.** A portion of the support member **1500** may be attached to the bobbin **1110.** An adhesive may be disposed in the groove **1111** of the bobbin **1110.** The other part of the support member **1500** may be attached to the housing **1210.** The adhesive may be disposed in the groove **1211** of the housing **1210.**

The support member **1500** may comprise a first fixed portion **1510.** The first fixed portion **1510** may be fixed inside the groove **1111** of the bobbin **1110.** The first fixed portion **1510** may be formed to have a width corresponding to the groove **1111** of the bobbin **1110.** The first fixed portion **1510** may be fixed to the bobbin **1110** by an adhesive. The first fixed portion **1510** may be inserted into the groove **1111** of the bobbin **1110** from the upper side. The first fixed portion **1510** may be disposed at a bottom surface of the groove **1111** of the bobbin **1110.**

The support member **1500** may comprise a second fixed portion **1520.** The second fixed portion **1520** may be fixed inside the groove **1211** of the housing **1210.** The second fixed portion **1520** may be formed to have a width corresponding to the groove **1211** of the housing **1210.** The second fixed portion **1520** may be fixed to the housing **1210** by an adhesive. The second fixed portion **1520** may be inserted into the groove **1211** of the housing **1210** from an upper side. The second fixed portion **1520** may be disposed at a bottom surface of the groove **1211** of the housing **1210.**

The support member **1500** may comprise a connection portion **1530.** The connection portion **1530** may connect the first fixed portion **1510** and the second fixed portion **1520.** The connection portion **1530** may be formed to have a width smaller than the width of the first fixed portion **1510** and the second fixed portion **1520** at a portion being connected to the first fixed portion **1510** and the second fixed portion **1520.** At this time, the width of the connection portion **1530** may be the length in a direction perpendicular to the lengthwise direction of the connection portion **1530.** The connection portion **1530** may comprise a first portion **1540** being connected to the first fixed portion **1510** and having a width smaller than the width of the first fixed portion **1510.** The connection portion **1530** may comprise a second portion **1550** being connected to the second fixed portion **1520** and having a width smaller than the width of the second fixed portion **1520.** The first portion **1540** and the second portion **1550** of the connection portion **1530** may be hinge parts. Bending may occur in the first portion **1540** and the second portion **1550** of the connection portion **1530** when the bobbin **1110** moves. The first portion **1540** of the connection portion **1530** may be a first hinge part, and the second portion **1550** may be a second hinge part.

The connection portion **1530** may comprise a portion whose width increases as it moves away from the first fixed portion **1510** and the second fixed portion **1520.** The connection portion **1530** may comprise a third portion that connects the first portion **1540** and the second portion **1550** and is formed to have a width wider than the width of the first portion **1540** and the second portion **1550.** The connection portion **1530** may be formed to have the largest width in the central portion. The outer surface of the connection portion **1530** may comprise a curved surface. The outer surface of the connection portion **1530** may be formed only with a curved surface. The connection portion **1530** may be formed to have a curvature.

In a modified embodiment illustrated in (a) of FIG. 24e, the support member **1500a** may be extended from the first fixed portion **1510** to the second fixed portion **1520** of the connection portion **1530a** with a constant width or diameter.

In a modified embodiment illustrated in (b) of FIG. 24e, the support member **1500b** may comprise a cylindrical connection portion **1530b.** The cylindrical shape may connect the first portion **1540** and the second portion **1550** having a width smaller than that of the first fixed portion **1510** and the second fixed portion **1520.**

In a modified embodiment illustrated in (c) of FIG. 24e, the support member **1500c** may comprise a groove **1560** being formed in the connection portion **1530c.** The groove **1560** may be formed between the first portion **1540** and the second portion **1550** having a width smaller than that of the first fixed portion **1510** and the second fixed portion **1520.**

In a modified embodiment, the lens driving device **1010** may comprise the support member **500** of the first embodiment of the present invention. The support member **500** may connect the bobbin **1110** and the housing **1210.** The support member **500** may elastically support the bobbin **1110** with respect to the housing **1210** when the bobbin **1110** moves in a direction perpendicular to the optical axis direction. The support member **500** may have elasticity. The support member **500** may comprise a portion having elasticity. The support member **500** may be elastically restored. The support member **500** may comprise a non-metallic material. The support member **500** may be a non-metal. The support member **500** may be formed of an injection molding product. The support member **500** may comprise an elastomer. The support member **500** may be disposed long in length in an optical axis direction. One end of the support member **500** may be fixed to the bobbin **1110** and the other end of the support member **500** may be fixed to the housing **1210.** One end of the support member **500** is coupled to the bobbin **1110** and the other end may be coupled to the moving portion.

Furthermore, in a modified embodiment, the lens driving device **1010** may comprise some configurations of the first embodiment of the present invention replacing some configurations of the second embodiment of the present invention.

The lens driving device **1010** may comprise an elastic member **1600.** The elastic member **1600** may connect the base **1310** and the housing **1210.** The elastic member **1600** may be coupled to the base **1310** and the housing **1210.** The elastic member **1600** may be coupled to an upper surface of the base **1310** and an upper surface of the housing **1210.** The elastic member **1600** may have elasticity at least in part. The elastic member **1600** may be formed of metal. The elastic member **1600** may be formed of a conductive material. The elastic member **1600** may elastically support the housing **1210.** The elastic member **1600** may movably support the housing **1210.**

The elastic member **1600** may comprise a plurality of elastic members. The elastic member **1600** may comprise two elastic members. The elastic member **1600** may comprise first and second elastic members **1601** and **1602** being spaced apart from each other. The elastic member **1600** may electrically connect the second substrate **1330** and the coil **1220.**

The elastic member **1600** may comprise: an inner portion **1610** being coupled to the housing **1210;** an outer portion **1620** being coupled to the base **1310;** and a connection portion **1630** connecting the inner portion **1610** and the outer portion **1620.** In a second embodiment of the present invention, the inner portion **1610** may be disposed higher than the outer portion **1620.** Through such a structure, the elastic member **1600** may press the housing **1210** downward. Through this, the housing **1210** may maintain a state in which the bearing **1700** is in contact. The elastic member **1600** may press the housing **1210** in a direction toward the bearing **1700.** As illustrated in FIG. 33, the height of the inner side portion **1610** of the elastic member **1600** may be disposed higher than the height of the outer side portion **1620** of the elastic member **1600** by a predetermined distance (see **D** in FIGS. 32 and 33). Through this, downward pressure by the elastic force of the elastic member **1600** may be applied to the housing **1210** coupled to an inner side portion **1610** of the elastic member **1600.**

The lens driving device **1010** may comprise a bearing **1700.** The bearing **1700** may be disposed between the housing **1210** and the base **1310.** The bearing **1700** may be disposed between the housing **1210** and the first substrate **1320.** The bearing **1700** may contact the housing **1210** when the housing **1210** moves in a direction perpendicular to the optical axis direction. Through this, frictional force generated when the housing **1210** moves in a direction perpendicular to the optical axis direction may be reduced. The bearing **1700** is formed in a cylindrical shape, and one side may be fixed to the first substrate **1320** or the base **1310.** At this time, the other side of the bearing **1700** may be in contact with the housing **1210.** As a modified embodiment, the bearing **1700** may be formed in a ball shape. At this time, a groove or hole for fixing the ball-shaped bearing **1700** to the first substrate **1320** or the base **1310** may be provided.

In a second embodiment of the present invention, a groove may be formed at an outer surface of at least one of the bobbin **1110** and the housing **1210.** At this time, the support member **1500** may comprise a fixed portion being fixed inside the groove of the bobbin **1110** and/or the housing **1210.** The fixed portion of the support member **1500** may be inserted into the groove of the bobbin **1110** and/or the housing **1210.**

The lens driving device according to a second embodiment of the present invention may use a hinge when driving AF and an SMA wire when driving OIS. In this case, there is a reliability advantage, and it can be applied to a large aperture, heavy weight actuator.

In a second embodiment of the present invention, AF driving may be controlled by being connected to the injection mold member. The injection molding member can be maintained in balance by fixing in four directions. Electromagnetic force for AF driving can be secured by driving two magnets and coils.

The bobbin **1110** may be a lens carrier. The bobbin **1110** and the housing **1210** may be connected and controlled by the support member **1500** which is a plurality of injection mold members. AF driving may be driven up and down by electromagnetic force generated in the coil **1220** facing the magnet **1120.** At this time, the magnet **1120** and the coil **1220** may maintain balance and be used in plurality.

The second coupling part **1410** may be a fixed portion, and the first coupling part **1420** may be a driving unit. The fixed portion may be fixed to the base **1310** and the driving unit may be fixed to the housing **1210.** In a second embodiment of the present invention, OIS driving may be performed according to the SMA characteristic of which the length varies according to temperature. For example, when one SMA wire is shortened and the opposite SMA wire is lengthened, the second mover **1200** may move in the same direction.

The coil **1220** may be connected to the second substrate **1330** that is a PCB using the elastic member **1600.** The elastic member **1600** may be fixed to the housing **1210** and the base **1310.** An end of each of the four shape memory alloy wires **1430** connected to the second coupling part **1410,** which is a fixed portion, is connected to the first substrate **1320** and may be configured with one terminal. The ends of each of the four shape memory alloy wires **1430** connected to the first coupling part **1420** which is a driving unit may be connected to the first substrate **1320** through a PCB pattern or a conductive wire **1440** and may be configured with four terminals through each pattern.

In a second embodiment of the present invention, a height difference between the elastic members **1600** being fixed to the base **1310** and the housing **1210** is formed so that the second mover **1200,** which is the OIS body, can be maintained in a downward direction toward the bearing **1700** by the restoring force of the elastic member **1600.** The elastic member **1600** may be a spring.

In addition, the conductive wire **1440** below the housing **1210** may also maintain the second mover **1200** in a downward direction by restoring force. The conductive wire **1440** may be an elastic body for a wire signal.

Hereinafter, a camera module according to a second embodiment of the present invention will be described with reference to the drawings.

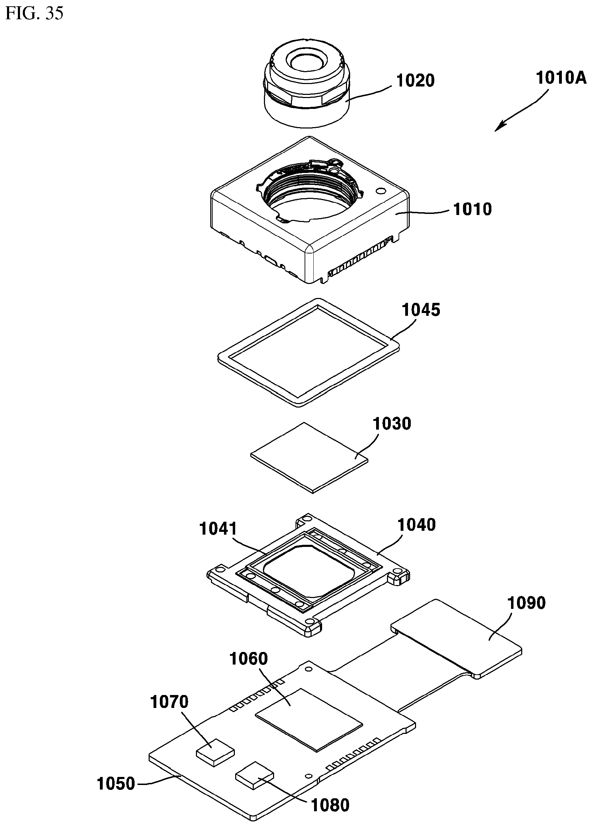

FIG. 35 is an exploded perspective view of a camera device according to a second embodiment of the present invention.

The camera module **1010A** may comprise a camera device.

The camera module **1010A** may comprise a lens module **1020.** The lens module **1020** may comprise at least one lens. The lens may be disposed at a position corresponding to the image sensor **1060.** The lens module **1020** may comprise a lens and a barrel. The lens module **1020** may be coupled to the bobbin **1110** of the lens driving device **1010.** The lens module **1020** may be coupled to the bobbin **1110** by screw-coupling and/or adhesive. The lens module **1020** may move integrally with the bobbin **1110.**

The camera module **1010A** may comprise a filter **1030.** The filter **1030** may serve to block light of a specific frequency band in light passing through the lens module **1020** from being incident on the image sensor **1060.** The filter **1030** may be disposed parallel to the x-y plane. The filter **1030** may be disposed between the lens module **1020** and the image sensor **1060.** The filter **1030** may be disposed in the sensor base **1040.** In a modified embodiment, the filter **1030** may be disposed in the base **1410.** The filter **1030** may comprise an infrared filter. The infrared filter may block light of the infrared region from being incident on the image sensor **1060.**

The camera module **1010A** may comprise a sensor base **1040.** The sensor base **1040** may be disposed between the lens driving device **1010** and the printed circuit board **1050.** The sensor base **1040** may comprise a protrusion **1041** in which the filter **1030** is disposed. An opening may be formed in a portion of the sensor base **1040** where the filter **1030** is disposed so that light passing through the filter **1030** may be incident on the image sensor **1060.** The adhesive member **1045** may couple or attach the base **1410** of the lens driving device **1010** to the sensor base **1040.** The adhesive member **1045** may additionally serve to prevent foreign substances from being introduced into the lens driving device **1010.** The adhesive member **1045** may comprise any one or more among an epoxy, a thermosetting adhesive, and an ultraviolet curable adhesive.

The camera module **1010A** may comprise a printed circuit board (PCB) **1050.** The printed circuit board **1050** may be a substrate or a circuit board. A lens driving device **1010** may be disposed in the printed circuit board **1050.** A sensor base **1040** may be disposed between the printed circuit board **1050** and the lens driving device **1010.** The printed circuit board **1050** may be electrically connected to the lens driving device **1010.** An image sensor **1060** may be disposed in the printed circuit board **1050.** The printed circuit board **1050** may comprise various circuits, elements, control units, and the like, in order to convert an image formed in the image sensor **1060** into an electrical signal and transmit it to an external device.

The camera module **1010A** may comprise an image sensor **1060.** The image sensor **1060** may have a configuration in which light passing through a lens and a filter **1030** is incident to form an image. The image sensor **1060** may be mounted on the printed circuit board **1050.** The image sensor **1060** may be electrically connected to the printed circuit board **1050.** For example, the image sensor **1060** may be coupled to the printed circuit board **1050** by a surface mounting technology (SMT). As another example, the image sensor **1060** may be coupled to the printed circuit board **1050** by a flip chip technology. The image sensor **1060** may be disposed so that the lens and the optical axis coincide. That is, the optical axis of the image sensor **1060** and the optical axis of the lens may be aligned. The image sensor **1060** may convert light irradiated to the effective image region of the image sensor **1060** into an electrical signal. The image sensor **1060** may be any one among a charge coupled device (CCD), a metal oxide semiconductor (MOS), a CPD, and a CID.

The camera module **1010A** may comprise a motion sensor **1070.** The motion sensor **1070** may be mounted on the printed circuit board **1050.** The motion sensor **1070** may be electrically connected to the control unit **1080** through a circuit pattern provided to the printed circuit board **1050.** The motion sensor **1070** may output rotational angular velocity information due to the movement of the camera module **1010A.** The motion sensor **1070** may comprise a 2-axis or 3-axis gyro sensor, or an angular velocity sensor.

The camera module **1010A** may comprise a control unit **1080.** The control unit **1080** may be disposed on the printed circuit board **1050.** The control unit **1080** may be electrically connected to the first and second coils **1220** and **1430** of the lens driving device **1010.** The control unit **1080** may individually control the direction, intensity, and amplitude of the current supplied to the first and second coils **1220** and **1430.** The control unit **1080** may control the lens driving device **1010** to perform an autofocus function and/or an image stabilization function. Furthermore, the control unit **1080** may perform autofocus feedback control and/or handshake correction feedback control for the lens driving device **1010.**

The camera module **1010A** may comprise a connector **1090.** The connector **1090** may be electrically connected to the printed circuit board **1050.** The connector **1090** may comprise a port for electrically connecting to an external device.

Hereinafter, an optical device according to a second embodiment of the present invention will be described with reference to the drawings.

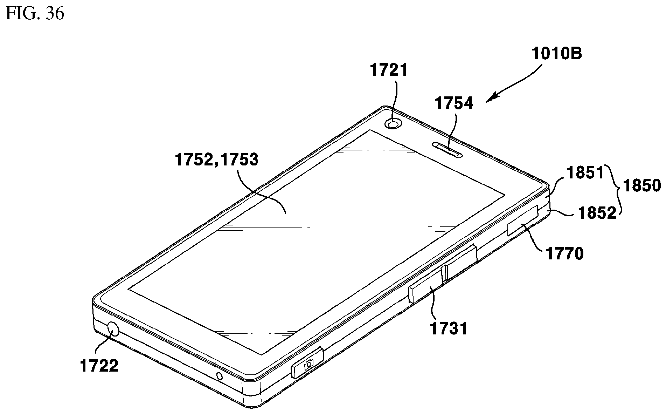

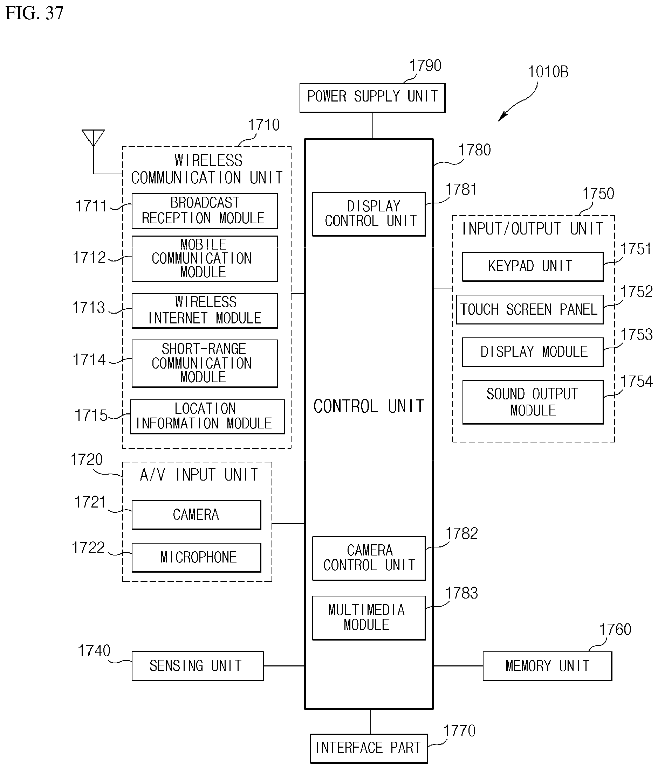

FIG. 36 is a perspective view illustrating an optical device according to a second embodiment of the present invention; and FIG. 37 is a block diagram of an optical device according to a second embodiment of the present invention.

The optical device **1010B** may comprise a portable terminal. The optical device **1010B** may be any one among a hand phone, a portable phone, a smart phone, a portable smart device, a digital camera, a laptop computer, a digital broadcasting terminal, a personal digital assistant (PDA), a portable multimedia player (PMP), and navigation. However, the type of the optical device **1010B** is not limited thereto, and any device for photographing a video or a picture may be comprised in the optical device **1010B.**

The optical device **1010B** may comprise a main body **1850.** The main body **1850** may have a bar shape. Or, the main body **1850** may have various structures, such as a slide type, a folder type, a swing type, a swivel type, and the like in which two or more sub-bodies are coupled to be relatively movable. The main body **1850** may comprise a case (casing, housing, and cover) forming an outer appearance. For example, the main body **1850** may comprise a front case **1851** and a rear case **1852.** Various electronic components of the optical device **1010B** may be embedded in a space formed between the front case **1851** and the rear case **1852.** A display module **1753** may be disposed on one surface of the main body **1850.** A camera **1721** may be disposed on one or more surfaces of one surface and the other surface being disposed at an opposite side of the one surface of the main body **1850.**

The optical device **1010B** may comprise a wireless communication unit **1710.** The wireless communication unit **1710** may comprise one or more modules enabling wireless communication between the optical device **1010B** and the wireless communication system, or between the optical device **1010B** and the network in which the optical device **1010B** is located. For example, the wireless communication unit **1710** may comprise any one or more among a broadcast reception module **1711,** a mobile communication module **1712,** a wireless Internet module **1713,** a short-range communication module **1714,** and a location information module **1715.**

The optical device **1010B** may comprise an A/V input unit **1720.** The A/V input unit **1720** is for inputting an audio signal or a video signal and may comprise any one or more of a camera **1721** and a microphone **1722.** At this time, the camera **1721** may comprise a camera module **1010A** according to a second embodiment of the present embodiment.

The optical device **1010B** may comprise a sensing unit **1740.** The sensing unit **1740** may generate a sensing signal for controlling the operation of the optical device **1010B** by detecting the current state of the optical device **1010B** such as the opening/closing state of the optical device **1010B,** the position of the optical device **1010B,** the presence or absence of user contact, the orientation of the optical device **1010B,** acceleration/deceleration of the optical device **1010B,** and the like. For example, when the optical device **1010B** is in the form of a slide phone, it is possible to sense whether the slide phone is opened or closed. In addition, it is responsible for sensing functions related to whether the power supply unit **1790** is supplied with power, whether the interface unit **1770** is coupled to an external device, and the like.

The optical device **1010B** may comprise an input/output unit **1750.** The input/output unit **1750** may be configured to generate an input or output related to visual, auditory, or tactile sense. The input/output unit **1750** may generate input data for controlling the operation of the optical device **1010B,** and may output information processed by the optical device **1010B.**

The input/output unit **1750** may comprise any one or more among a keypad unit **1751,** a touch screen panel **1752,** a display module **1753,** and a sound output module **1754.** The keypad unit **1751** may generate input data in response to a keypad input. The touch screen panel **1752** may convert a change in capacitance generated due to a user's touch on a specific region of the touch screen into an electrical input signal. The display module **1753** may output an image photographed by the camera **1721.** The display module **1753** may comprise a plurality of pixels whose color changes according to an electrical signal. For example, the display module **1753** may comprise at least one among a liquid crystal display, a thin film transistor liquid crystal display, an organic light emitting diode, a flexible display, and a 3D display. The sound output module **1754** may output audio data received from the wireless communication unit **1710** in a call signal reception, a call mode, a recording mode, a voice recognition mode, or a broadcast reception mode, or stored in the memory unit **1760.**

The optical device **1010B** may comprise a memory unit **1760.** A program for processing and controlling the control unit **1780** may be stored in the memory unit **1760.** In addition, the memory unit **1760** may store input/output data, for example, any one or more of a phone book, a message, an audio, a still image, a photo, and a moving picture. The memory unit **1760** may store an image photographed by the camera **1721,** for example, a photo or a video.

The optical device **1010B** may comprise an interface unit **1770.** The interface unit **1770** serves as a path for connecting to an external device being connected to the optical device **1010B.** The interface unit **1770** may receive data from an external device, receive power and transmit it to each component inside the optical device **1010B,** or transmit data inside the optical device **1010B** to the external device. The interface unit **1770** may comprise any one or more among a wired/wireless headset port, an external charger port, a wired/wireless data port, a memory card port, a port for connecting a device equipped with an identification module, and an audio I/O port, a video I/O port, and an earphone port.

The optical device **1010B** may comprise a control unit **1780.** The control unit **1780** may control the overall operation of the optical device **1010B.** The control unit **1780** may perform related control and processing for voice call, data communication, video call, and the like. The control unit **1780** may comprise a display control unit **1781** that controls a display module **1753** that is a display of the optical device **1010B.** The control unit **1780** may comprise a camera control unit **1782** that controls the camera module. The control unit **1780** may comprise a multimedia module **1783** for playing multimedia. The multimedia module **1783** may be provided inside the control unit **1780** or may be provided separately from the control unit **1780.** The control unit **1780** may perform a pattern recognition process capable of recognizing a handwriting input or a drawing input performed on the touch screen as characters and images, respectively.

The optical device **1010B** may comprise a power supply unit **1790.** The power supply unit **1790** may receive external power or internal power by the control of the control unit **1780** to supply power required for operation of each component.

The lens driving device according to the third embodiment of the present invention may comprise a part of the lens driving device according to the first embodiment of the present invention and a part of the lens driving device according to the second embodiment of the present invention. For example, the lens driving device according to the third embodiment may comprise the support member **500** of the first embodiment and the support member **1500** of the second embodiment together. Furthermore, the lens driving device according to the third embodiment may comprise the configuration of the first embodiment and the configuration of the second embodiment other than the support members **500** and **1500** together.
According to an example, a lens driving device comprises a fixed portion; a moving portion disposed to move with respect to the fixed portion; a bobbin disposed in the moving portion; a magnet disposed on any one of the bobbin and the fixed portion; a coil disposed on the other one of the bobbin and the fixed portion; a support member comprising one end coupled with the bobbin and the other end coupled with the moving portion; and a shape memory alloy member coupled to the fixed portion and the moving portion. The shape memory alloy member is configured to move the moving portion in an optical axis direction. The coil and the magnet are configured to move the bobbin with respect to the moving portion in a direction perpendicular to the optical axis direction.
The lens driving device according to the above example may have one or more of the following:
- both ends of the shape memory alloy member are connected with the fixed portion, and a central region of the shape memory alloy member is connected with the moving portion.
   - the support member has regions having different widths.
- the support member has a constant width in a lengthwise direction.
   - a width of a peripheral region of the support member is thicker than a width of a central region of the support member.
   - the support member has a head portion and a body portion, and a width of the head portion is greater than a width of the body portion.
- the shape memory alloy member comprises a first unit shape memory alloy member and a second unit shape memory alloy member.
- the magnet comprises a first unit magnet and a second unit magnet.
   - the moving portion comprises a first corner region connected with the first unit shape memory alloy member and a second corner region adjacent to the first corner region, and the first unit magnet is disposed closer to the second corner region than to the first corner region.
According to another example, lens driving device comprises a fixed portion; a moving portion moving with respect to the fixed portion in an optical axis direction; a bobbin disposed in the moving portion; a driving unit configured to move the bobbin in a direction perpendicular to the optical axis direction; a support member coupled with the bobbin and the moving portion; and a shape memory alloy member coupled with the fixed portion and the moving portion, wherein the support member comprises regions having different widths.

Although the embodiment of the present invention has been described above with reference to the accompanying drawings, those of ordinary skill in the art to which the present invention belongs will understand that the present invention may be embodied in other specific forms. Therefore, it should be understood that the embodiments described above are illustrative in all respects and not restrictive.

## Claims

1. A camera module, **characterized in that**:
a base (1310);
a housing (1210) spaced apart from the base (1310);
a bobbin (1110) movably coupled to the housing (1210);
a lens (1020) coupled to the bobbin (1110);
a coil (1220) and a magnet (1120) configured to move the bobbin (1110) in an optical axis direction;
a shape memory alloy member (1400) configured to move the housing (1210) in a direction perpendicular to the optical axis direction with respect to the base (1310);
a second substrate (1330) electrically connected to the coil (1220); and
an elastic member (1600) electrically connecting the second substrate (1330) and the coil (1220),
wherein the bobbin (1110) comprises first and second lateral surfaces opposite to each other, and third and fourth lateral surfaces opposite to each other,
wherein the coil (1220) is disposed on the bobbin (1110),
wherein the coil (1220) comprises a first coil disposed on the first lateral surface of the bobbin (1110) and a second coil disposed on the second lateral surface of the bobbin (1110),
wherein the magnet (1120) comprises a first magnet facing the first coil and a second magnet facing the second coil,
wherein the magnet (1120) is not disposed on the third and fourth lateral surfaces of the bobbin (1110),
wherein the shape memory alloy member (1400) comprises first to fourth shape memory alloy wires (1431, 1432, 1433, 1434), and
wherein the first to fourth shape memory alloy wires (1431, 1432, 1433, 1434) are disposed at positions corresponding to the first to fourth lateral surfaces of the bobbin (1110), respectively.

2. The camera module of claim 1, comprising a support member (1500) configured to support the bobbin (1110) with respect to the housing (1210) when the bobbin (1110) moves in the optical axis direction.

3. The camera module of claim 1 or 2, comprising a bearing (1700) disposed between the housing (1210) and the base (1310).

4. The camera module of any one of claims 1 to 3, wherein the elastic member (1600) is coupled to an upper surface of the housing (1210).

5. The camera module of any one of claims 1 to 4, wherein the lens (1020) is configured to move integrally with the housing (1210) when the housing (1210) moves in the direction perpendicular to the optical axis direction by the shape memory alloy member (1400).

6. The camera module of any one of claims 1 to 5, wherein the shape memory alloy member (1400) comprises a first coupling part (1420) configured to move together with the housing (1210), a second coupling part (1410) coupled to the base (1310), and a shape memory alloy wire (1430) connecting the first coupling part (1420) and the second coupling part (1410),
wherein the shape memory alloy wire (1430) comprises the first to fourth shape memory alloy wires (1431, 1432, 1433, 1434), and
wherein the shape memory alloy wire (1430) is configured to change in length when a current is applied.

7. The camera module of any one of claims 1 to 6, wherein the first and second shape memory alloy wires (1431, 1432) are disposed in a first direction perpendicular to the optical axis direction, and
wherein the third and fourth shape memory alloy wires (1433, 1434) are disposed in a second direction perpendicular to the first direction.

8. The camera module of claim 6 or 7, wherein the first coupling part (1420) comprises a metal.

9. The camera module of any one of claims 1 to 8, wherein the coil (1220) comprises a connection coil connecting the first coil and the second coil.

10. The camera module of any one of claims 1 to 9, comprising a cover member (1340) formed of a metal plate,
wherein the housing (1210) is disposed in the cover member (1340).

11. The camera module of claim 10, wherein the cover member (1340) is grounded.

12. The camera module of any one of claims 1 to 11, wherein the support member (1500) comprises a second fixed portion (1520) fixed to a corner area of the housing (1210).

13. The camera module of any one of claims 1 to 12, wherein the second substrate (1330) is disposed in a direction parallel to an optical axis.

14. The camera module of claim 2, wherein the support member (1500) is formed of an elastomer.

15. An optical device comprising:
a main body (1850);
the camera module (1721) of any one of claims 1 to 14 disposed on the main body (1850); and
a display (1753) disposed on the main body (1850) and outputting an image photographed by the camera module (1721).

## Patentansprüche

1. Kameramodul, **gekennzeichnet durch**:
eine Basis (1310);
ein Gehäuse (1210), das von der Basis (1310) beabstandet ist;
einen Spulenkörper (1110), der beweglich mit dem Gehäuse (1210) gekoppelt ist;
ein Objektiv (1020), das mit dem Spulenkörper (1110) gekoppelt ist;
eine Spule (1220) und einen Magneten (1120), die so eingerichtet sind, dass sie den Spulenkörper (1110) in Richtung einer optischen Achse bewegen;
ein Formgedächtnislegierungsbauteil (1400), das so eingerichtet ist, dass es das Gehäuse (1210) in Bezug auf die Basis (1310) in einer Richtung senkrecht zu der Richtung der optischen Achse bewegt;
ein zweites Substrat (1330), das elektrisch mit der Spule (1220) verbunden ist; und
ein elastisches Bauteil (1600), das das zweite Substrat (1330) und die Spule (1220) elektrisch verbindet,
wobei der Spulenkörper (1110) eine erste und eine zweite, einander gegenüberliegende Seitenfläche und eine dritte und eine vierte, einander gegenüberliegende Seitenfläche umfasst,
wobei die Spule (1220) auf dem Spulenkörper (1110) angeordnet ist,
wobei die Spule (1220) eine erste Spule umfasst, die auf der ersten Seitenfläche des Spulenkörpers (1110) angeordnet ist, und eine zweite Spule, die auf der zweiten Seitenfläche des Spulenkörpers (1110) angeordnet ist,
wobei der Magnet (1120) einen ersten Magneten umfasst, der der ersten Spule zugewandt ist, und einen zweiten Magneten, der der zweiten Spule zugewandt ist,
wobei der Magnet (1120) nicht auf der dritten und der vierten Seitenfläche des Spulenkörpers (1110) angeordnet ist,
wobei das Formgedächtnislegierungsbauteil (1400) einen ersten bis vierten Formgedächtnislegierungsdraht (1431, 1432, 1433, 1434) umfasst, und
wobei der erste bis vierte Formgedächtnislegierungsdraht (1431, 1432, 1433, 1434) an Positionen angeordnet sind, die jeweils der ersten bis vierten Seitenfläche des Spulenkörpers (1110) entsprechen.

2. Kameramodul nach Anspruch 1, das ein Stützbauteil (1500) umfasst, das so eingerichtet ist, dass es den Spulenkörper (1110) in Bezug auf das Gehäuse (1210) stützt, wenn sich der Spulenkörper (1110) in Richtung der optischen Achse bewegt.

3. Kameramodul nach Anspruch 1 oder 2, das ein Lager (1700) umfasst, das zwischen dem Gehäuse (1210) und der Basis (1310) angeordnet ist.

4. Kameramodul nach einem der Ansprüche 1 bis 3, wobei das elastische Bauteil (1600) mit einer oberen Fläche des Gehäuses (1210) gekoppelt ist.

5. Kameramodul nach einem der Ansprüche 1 bis 4, wobei das Objektiv (1020) so eingerichtet ist, dass es sich einstückig mit dem Gehäuse (1210) bewegt, wenn sich das Gehäuse (1210) durch das Formgedächtnislegierungsbauteil (1400) in der Richtung senkrecht zu der Richtung der optischen Achse bewegt.

6. Kameramodul nach einem der Ansprüche 1 bis 5, wobei das Formgedächtnislegierungsbauteil (1400) ein erstes Kopplungsteil (1420), das so eingerichtet ist, dass es sich zusammen mit dem Gehäuse (1210) bewegt, ein zweites Kopplungsteil (1410), das mit der Basis (1310) gekoppelt ist, und einen Formgedächtnislegierungsdraht (1430) umfasst, der das erste Kopplungsteil (1420) und das zweite Kopplungsteil (1410) verbindet,
wobei der Formgedächtnislegierungsdraht (1430) den ersten bis vierten Formgedächtnislegierungsdraht (1431, 1432, 1433, 1434) umfasst, und
wobei der Formgedächtnislegierungsdraht (1430) so eingerichtet ist, dass er seine Länge ändert, wenn ein Strom angelegt wird.

7. Kameramodul nach einem der Ansprüche 1 bis 6, wobei der erste und der zweite Formgedächtnislegierungsdraht (1431, 1432) in einer ersten Richtung senkrecht zu der Richtung der optischen Achse angeordnet sind, und
wobei der dritte und der vierte Formgedächtnislegierungsdraht (1433, 1434) in einer zweiten Richtung senkrecht zu der ersten Richtung angeordnet sind.

8. Kameramodul nach Anspruch 6 oder 7, wobei das erste Kopplungsteil (1420) ein Metall umfasst.

9. Kameramodul nach einem der Ansprüche 1 bis 8, wobei die Spule (1220) eine Verbindungsspule umfasst, die die erste Spule und die zweite Spule verbindet.

10. Kameramodul nach einem der Ansprüche 1 bis 9, das ein Abdeckbauteil (1340) umfasst, das aus einer Metallplatte gebildet ist,
wobei das Gehäuse (1210) in dem Abdeckbauteil (1340) angeordnet ist.

11. Kameramodul nach Anspruch 10, wobei das Abdeckbauteil (1340) geerdet ist.

12. Kameramodul nach einem der Ansprüche 1 bis 11, wobei das Stützbauteil (1500) einen zweiten festen Abschnitt (1520) umfasst, der an einem Eckbereich des Gehäuses (1210) befestigt ist.

13. Kameramodul nach einem der Ansprüche 1 bis 12, wobei das zweite Substrat (1330) in einer Richtung parallel zu einer optischen Achse angeordnet ist.

14. Kameramodul nach Anspruch 2, wobei das Stützbauteil (1500) aus einem Elastomer gebildet ist.

15. Optische Vorrichtung, umfassend:
einen Hauptkörper (1850);
das Kameramodul (1721) nach einem der Ansprüche 1 bis 14, das auf dem Hauptkörper (1850) angeordnet ist; und
eine Anzeige (1753), die auf dem Hauptkörper (1850) angeordnet ist und ein von dem Kameramodul (1721) fotografiertes Bild ausgibt.

## Revendications

1. Module de caméra, **caractérisé par** :
une base (1310) ;
un boîtier (1210) espacé de la base (1310) ;
une bobine (1110) couplée de manière mobile au boîtier (1210) ;
une lentille (1020) couplée à la bobine (1110) ;
un enroulement (1220) et un aimant (1120) configurés pour déplacer la bobine (1110) dans une direction d'axe optique ;
un organe en alliage à mémoire de forme (1400) configuré pour déplacer le boîtier (1210) dans une direction perpendiculaire à la direction d'axe optique par rapport à la base (1310) ;
un second substrat (1330) connecté électriquement à l'enroulement (1220) ; et
un organe élastique (1600) connectant électriquement le second substrat (1330) et l'enroulement (1220),
dans lequel la bobine (1110) comprend des première et deuxième surfaces latérales opposées l'une à l'autre, et des troisième et quatrième surfaces latérales opposées l'une à l'autre,
dans lequel l'enroulement (1220) est disposé sur la bobine (1110) ;
dans lequel l'enroulement (1220) comprend un premier enroulement disposé sur la première surface latérale de la bobine (1110) et un second enroulement disposé sur la deuxième surface latérale de la bobine (1110),
dans lequel l'aimant (1120) comprend un premier aimant faisant face au premier enroulement et un second aimant faisant face au second enroulement,
dans lequel l'aimant (1120) n'est pas disposé sur les troisième et quatrième surfaces latérales de la bobine (1110),
dans lequel l'organe en alliage à mémoire de forme (1400) comprend des premier à quatrième fils en alliage à mémoire de forme (1431, 1432, 1433, 1434), et
dans lequel les premier à quatrième fils en alliage à mémoire de forme (1431, 1432, 1433, 1434) sont disposés à des positions correspondant aux première à quatrième surfaces latérales de la bobine (1110), respectivement.

2. Module de caméra selon la revendication 1, comprenant un organe de support (1500) configuré pour supporter la bobine (1110) par rapport au boîtier (1210) lorsque la bobine (1110) se déplace dans la direction d'axe optique.

3. Module de caméra selon la revendication 1 ou 2, comprenant un palier (1700) disposé entre le boîtier (1210) et la base (1310).

4. Module de caméra selon l'une quelconque des revendications 1 à 3, dans lequel l'organe élastique (1600) est couplé à une surface supérieure du boîtier (1210).

5. Module de caméra selon l'une quelconque des revendications 1 à 4, dans lequel la lentille (1020) est configurée pour se déplacer solidairement avec le boîtier (1210) lorsque le boîtier (1210) se déplace dans la direction perpendiculaire à la direction d'axe optique par l'organe en alliage à mémoire de forme (1400).

6. Module de caméra selon l'une quelconque des revendications 1 à 5, dans lequel l'organe en alliage à mémoire de forme (1400) comprend une première partie de couplage (1420) configurée pour se déplacer conjointement avec le boîtier (1210), une seconde partie de couplage (1410) couplée à la base (1310), et un fil en alliage à mémoire de forme (1430) reliant la première partie de couplage (1420) et la seconde partie de couplage (1410),
dans lequel le fil en alliage à mémoire de forme (1430) comprend les premier à quatrième fils en alliage à mémoire de forme (1431, 1432, 1433, 1434), et
dans lequel le fil en alliage à mémoire de forme (1430) est configuré pour changer de longueur lorsqu'un courant est appliqué.

7. Module de caméra selon l'une quelconque des revendications 1 à 6, dans lequel les premier et deuxième fils en alliage à mémoire de forme (1431, 1432) sont disposés dans une première direction perpendiculaire à la direction d'axe optique, et
dans lequel les troisième et quatrième fils en alliage à mémoire de forme (1433, 1434) sont disposés dans une seconde direction perpendiculairement à la première direction.

8. Module de caméra selon la revendication 6 ou 7, dans lequel la première partie de couplage (1420) comprend un métal.

9. Module de caméra selon l'une quelconque des revendications 1 à 8, dans lequel l'enroulement (1220) comprend un enroulement de connexion connectant le premier enroulement et le second enroulement.

10. Module de caméra selon l'une quelconque des revendications 1 à 9, comprenant un organe de recouvrement (1340) formé d'une plaque métallique,
dans lequel le boîtier (1210) est disposé dans l'organe de recouvrement (1340).

11. Module de caméra selon la revendication 10, dans lequel l'organe de recouvrement (1340) est mis à la terre.

12. Module de caméra selon l'une quelconque des revendications 1 à 11, dans lequel l'organe de support (1500) comprend une seconde portion fixe (1520) fixée à une zone d'angle du boîtier (1210).

13. Module de caméra selon l'une quelconque des revendications 1 à 12, dans lequel le second substrat (1330) est disposé dans une direction parallèle à un axe optique.

14. Module de caméra selon la revendication 2, dans lequel l'organe de support (1500) est formé d'un élastomère.

15. Dispositif optique comprenant :
un corps principal (1850) ;
le module de caméra (1721) selon l'une quelconque des revendications 1 à 14 disposé sur le corps principal (1850) ; et
un afficheur (1753) disposé sur le corps principal (1850) et délivrant une image photographiée par le module de caméra (1721).
